(19) **Europäisches Patentamt / European Patent Office / Office européen des brevets**

(11) **EP 4 783 651 A1**

(12) **EUROPEAN PATENT APPLICATION**
published in accordance with Art. 153(4) EPC

(43) Date of publication:
**29.07.2026 Bulletin 2026/31**

(21) Application number: **24878872.1**

(22) Date of filing: **09.10.2024**

(51) International Patent Classification (IPC):
**H04W 24/08** *(2009.01)*  **H04W 36/00** *(2009.01)*
**H04W 84/06** *(2009.01)*

(52) Cooperative Patent Classification (CPC):
**H04W 24/08; H04W 36/00; H04W 36/08;
H04W 84/06**

(86) International application number:
**PCT/CN2024/123631**

(87) International publication number:
**WO 2025/082228 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.10.2023 CN 202311348301**

(71) Applicant: **HUAWEI TECHNOLOGIES CO., LTD.
Shenzhen 518129 (CN)**

(72) Inventors:
• **XIE, Xi**
  **Shenzhen, Guangdong 518129 (CN)**
• **WANG, Gang**
  **Shenzhen, Guangdong 518129 (CN)**
• **CHANG, Junren**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND RELATED APPARATUS**

(57) A communication method and a related apparatus are provided. In the method, based on actual coverage statuses of neighboring cells, different orbits/neighboring cells are distinguished to adaptively provide different distance thresholds to control whether a terminal device starts measurement on the orbits/neighboring cells, or different orbits/neighboring cells are distinguished to adaptively provide different distance thresholds to control whether a terminal device uses the orbits/neighboring cells as target cells for cell reselection. This helps improve communication performance.

FIG. 6

## Description

COMMUNICATION METHOD AND RELATED APPARATUS

This application claims priority to Chinese Patent Application No. 202311348301.9, filed with the China National Intellectual Property Administration on October 17, 2023 and entitled "COMMUNICATION METHOD AND RELATED APPARATUS", which is incorporated herein by reference in its entirety.

## TECHNICAL FIELD

This application relates to the field of communication technologies, and in particular, to a communication method and a related apparatus.

## BACKGROUND

Compared with a terrestrial network communication system, a non-terrestrial network (non-terrestrial network, NTN) communication system has specific advantages. For example, an NTN has features such as a longer communication distance, a larger coverage area, a wider communication frequency band, and a capability of providing communication services for users at any time and at any position. In the terrestrial network communication system, a terminal device may perform radio resource management (radio resource management, RRM) measurement based on signal quality of a cell, and determine, based on a measurement result, whether to perform cell handover (behavior of the terminal device in a connected state) or cell selection/reselection (behavior of the terminal device in a non-connected state), to ensure that a communication link between a network and the terminal device is not interrupted due to movement of the terminal device. However, in the NTN communication system, if it is determined, based only on signal quality of an NTN cell, whether to perform RRM measurement and/or cell selection/reselection, communication performance cannot be ensured.

## SUMMARY

This application provides a communication method and a related apparatus, to improve communication performance.

According to a first aspect, this application provides a communication method. Optionally, the method may be performed by a terminal device, a component or an apparatus (for example, a processor, a chip, or a chip system) used in the terminal device, or a logical module or software that can implement all or some functions of the terminal device. The method includes: receiving distance threshold information, where the distance threshold information indicates distance thresholds corresponding to different orbit types, and/or distance thresholds corresponding to different orbits, and/or distance thresholds corresponding to different cells, the orbit is an orbit of a non-terrestrial network device, and the cell is a non-terrestrial network NTN cell; and determining, based on the distance threshold information, whether to perform measurement and/or cell reselection.

In this application, for RRM measurement/cell reselection in an NTN scenario, whether to perform RRM measurement and/or cell reselection is determined with reference to the distance threshold information. This manner helps ensure communication performance. In addition, the distance threshold information in this application may indicate the distance thresholds corresponding to the different orbit types, and/or the distance thresholds corresponding to the different orbits, and/or the distance thresholds corresponding to the different cells. In the NTN scenario, because satellites may be located in different orbits, coverage overlapping statuses between cells of different orbits may vary. Therefore, a manner of configuring a distance threshold at an orbit type/orbit/cell granularity is used, so that control over determining, based on the distance threshold information, whether to perform measurement and/or cell reselection is more appropriate, thereby further improving communication performance and improving user experience.

In a possible design, the distance threshold information indicates the distance thresholds corresponding to the different cells; and determining, based on the distance threshold information, whether to perform measurement and/or cell reselection includes:

determining, based on the distance threshold information, a first distance threshold corresponding to a first cell, where the first cell is a neighboring cell of the terminal device; and
determining, based on the first distance threshold, whether to perform measurement on the first cell and/or whether to reselect to the first cell.

In this design, when the distance threshold information indicates the distance thresholds corresponding to the different cells, the terminal device determines, based on the distance threshold information, the first distance threshold corresponding to the neighboring cell (that is, the first cell) of the terminal device, and then determines, based on the first distance threshold, whether to perform measurement on the first cell and/or whether to reselect to the first cell. This manner fully considers a coverage overlapping status between the serving cell of the terminal device and the first cell, and therefore helps improve communication performance.

In a possible design, the distance threshold information indicates the distance thresholds corresponding to the different orbit types and/or the distance thresholds corresponding to the different orbits; and determining, based on the distance threshold information, whether to perform measurement and/or cell reselection includes:

determining, based on the distance threshold information, a second distance threshold corresponding to an orbit of a non-terrestrial network device corresponding to a first cell, where the first cell is a neighboring cell of the terminal device; and
determining, based on the second distance threshold, whether to perform measurement on the first cell and/or whether to reselect to the first cell.

In this design, when the distance threshold information indicates the distance thresholds corresponding to the different orbit types and/or the distance thresholds corresponding to the different orbits, the terminal device determines, based on the distance threshold information, the second distance threshold of the orbit of the non-terrestrial network device corresponding to the neighboring cell (that is, the first cell) of the terminal device, and then determines, based on the second distance threshold, whether to perform measurement on the first cell and/or whether to reselect to the first cell. This manner fully considers a coverage overlapping status between the serving cell of the terminal device and the first cell, and therefore helps improve communication performance.

In a possible design, the distance threshold information includes the distance thresholds corresponding to the different orbit types, and/or the distance thresholds corresponding to the different orbits, and/or the distance thresholds corresponding to the different cells; or
the distance threshold information includes a reference distance threshold, and distance threshold adjustment values corresponding to the different orbit types, and/or distance threshold adjustment values corresponding to the different orbits, and/or distance threshold adjustment values corresponding to the different cells, where the reference distance threshold and the distance threshold adjustment values corresponding to the different orbit types are used to determine the distance thresholds corresponding to the different orbit types, the reference distance threshold and the distance threshold adjustment values corresponding to the different orbits are used to determine the distance thresholds corresponding to the different orbits, and the reference distance threshold and the distance threshold adjustment values corresponding to the different cells are used to determine the distance thresholds corresponding to the different cells.

In this design, the distance threshold information may directly include absolute thresholds, to be specific, directly notify specific values of the distance thresholds corresponding to the different orbit types, and/or the distance thresholds corresponding to the different orbits, and/or the distance thresholds corresponding to the different cells, which is more intuitive. Alternatively, the distance threshold information may include the reference distance threshold and adjustment parameters (for example, the distance threshold adjustment values corresponding to the different orbit types, and/or the distance threshold adjustment values corresponding to the different orbits, and/or the distance threshold adjustment values corresponding to the different cells), and specific values of the distance thresholds corresponding to the different orbit types, and/or the distance thresholds corresponding to the different orbits, and/or the distance thresholds corresponding to the different cells may be determined based on the reference distance threshold and the adjustment parameters. This manner of notifying the adjustment parameters helps reduce resource overheads. Optionally, the reference distance threshold may be predefined or preconfigured. Therefore, the distance threshold information includes the distance threshold adjustment values corresponding to the different orbit types, and/or the distance threshold adjustment values corresponding to the different orbits, and/or the distance threshold adjustment values corresponding to the different cells. This can further reduce resource overheads.

In a possible design, the reference distance threshold is a distance threshold corresponding to an orbit of a non-terrestrial network device corresponding to a serving cell of the terminal device.

In a possible design, the distance threshold information indicates the distance thresholds corresponding to the different orbit types, and the different orbit types include a co-orbit type and a non-co-orbit type; and

when the orbit of the non-terrestrial network device corresponding to the first cell is the same as the orbit of the non-terrestrial network device corresponding to the serving cell of the terminal device, the second distance threshold is a distance threshold corresponding to the co-orbit type; or
when the orbit of the non-terrestrial network device corresponding to the first cell is different from the orbit of the non-terrestrial network device corresponding to the serving cell of the terminal device, the second distance threshold is a distance threshold corresponding to the non-co-orbit type.

In a possible design, the method further includes:
receiving distance threshold update information, where the distance threshold update information is used to update the distance thresholds corresponding to the different orbit types, and/or the distance thresholds corresponding to the different orbits, and/or the distance thresholds corresponding to the different cells.

In this design, the distance threshold information may be updated based on a satellite coverage status. For example, in regions of different latitudes, if relative positions between orbits of satellites change, the distance threshold update information may be used to update the distance thresholds corresponding to the different orbit types, and/or the distance thresholds corresponding to the different orbits, and/or the distance thresholds corresponding to the different cells.

According to a second aspect, this application provides a communication method. Optionally, the method may be performed by a terminal device, a component or an apparatus (for example, a processor, a chip, or a chip system) used in the terminal device, or a logical module or software that can implement all or some functions of the terminal device. The method includes: determining, based on a reference distance threshold and a distance threshold derivation relationship, a third distance threshold corresponding to an orbit of a non-terrestrial network device corresponding to a first cell, where the first cell is a neighboring cell of the terminal device, and the first cell is a non-terrestrial network NTN cell; and determining, based on the third distance threshold, whether to perform measurement on the first cell and/or whether to reselect to the first cell.

In this application, for RRM measurement/cell reselection in an NTN scenario, the third distance threshold corresponding to the orbit of the non-terrestrial network device corresponding to the neighboring cell (that is, the first cell) of the terminal device is determined with reference to the reference distance threshold and the distance threshold derivation relationship, and whether to perform measurement on the first cell and/or whether to reselect to the first cell are/is determined based on the third distance threshold. This manner enables control over RRM measurement and/or cell reselection to be more appropriate, improves communication performance, and improves user experience.

In a possible design, the distance threshold derivation relationship includes a first correspondence between different latitude ranges and distance threshold adjustment values for a co-orbit type, and/or a second correspondence between different latitude ranges and distance threshold adjustment values for a non-co-orbit type, where the reference distance threshold and the distance threshold adjustment value are used to determine the third distance threshold.

In this design, the distance threshold derivation relationship may include a correspondence between different latitude ranges of different orbit types (that is, the co-orbit type and the non-co-orbit type) and distance threshold adjustment values, which has high applicability.

In a possible design, the reference distance threshold is a distance threshold used by the terminal device within a first latitude range.

In a possible design, when the orbit of the non-terrestrial network device corresponding to the first cell is the same as an orbit of a non-terrestrial network device corresponding to a serving cell of the terminal device, the third distance threshold is determined based on the reference distance threshold, the first correspondence, and a latitude range of the terminal device; and/or when the orbit of the non-terrestrial network device corresponding to the first cell is different from the orbit of the non-terrestrial network device corresponding to the serving cell of the terminal device, the third distance threshold is determined based on the reference distance threshold, the second correspondence, and the latitude range of the terminal device.

In a possible design, the distance threshold derivation relationship includes a third correspondence between different orbital spacings and distance threshold adjustment values.

In this design, the distance threshold derivation relationship may be related to an orbit/satellite spacing, which has high applicability.

In a possible design, the reference distance threshold is a distance threshold corresponding to an orbit of a non-terrestrial network device corresponding to a serving cell of the terminal device.

In a possible design, the third distance threshold is determined based on the reference distance threshold, the third correspondence, and an orbital spacing between the orbit of the non-terrestrial network device corresponding to the first cell and the orbit of the non-terrestrial network device corresponding to the serving cell of the terminal device.

In a possible design, the reference distance threshold and/or the distance threshold derivation relationship are/is predefined, preconfigured, configured by an access network device, or configured by a non-terrestrial network device.

In a possible design, the method further includes:
receiving reference distance threshold update information and/or distance threshold derivation relationship update information, where the reference distance threshold update information is used to update the reference distance threshold, and/or the distance threshold derivation relationship update information is used to update the distance threshold derivation relationship.

In this design, the reference distance threshold and/or the distance threshold derivation relationship may be updated based on a satellite status. For example, if orbit planning, coverage planning, or the like of the satellite changes, the threshold/derivation relationship may be updated.

According to a third aspect, this application provides a communication method. Optionally, the method may be performed by a network device, a component or an apparatus (for example, a processor, a chip, or a chip system) used in the network device, or a logical module or software that can implement all or some functions of the network device. The method includes: determining distance threshold information, where the distance threshold information indicates distance thresholds corresponding to different orbit types, and/or distance thresholds corresponding to different orbits, and/or distance thresholds corresponding to different cells, the orbit is an orbit of a non-terrestrial network device, and the cell is a non-terrestrial network NTN cell; and sending the distance threshold information.

In a possible design, the distance threshold information includes the distance thresholds corresponding to the different orbit types, and/or the distance thresholds corresponding to the different orbits, and/or the distance thresholds corresponding to the different cells; or

the distance threshold information includes a reference distance threshold, and distance threshold adjustment values corresponding to the different orbit types, and/or distance threshold adjustment values corresponding to the different orbits, and/or distance threshold adjustment values corresponding to the different cells, where the reference distance threshold and the distance threshold adjustment values corresponding to the different orbit types are used to determine the distance thresholds corresponding to the different orbit types, the reference distance threshold and the distance threshold adjustment values corresponding to the different orbits are used to determine the distance thresholds corresponding to the different orbits, and the reference distance threshold and the distance threshold adjustment values corresponding to the different cells are used to determine the distance thresholds corresponding to the different cells.

In a possible design, the reference distance threshold is a distance threshold corresponding to an orbit of a non-terrestrial network device corresponding to a serving cell of a terminal device.

In a possible design, the method further includes: sending distance threshold update information, where the distance threshold update information is used to update the distance thresholds corresponding to the different orbit types, and/or the distance thresholds corresponding to the different orbits, and/or the distance thresholds corresponding to the different cells.

According to a fourth aspect, this application provides a communication method. Optionally, the method may be performed by a network device, a component or an apparatus (for example, a processor, a chip, or a chip system) used in the network device, or a logical module or software that can implement all or some functions of the network device. The method includes: determining a reference distance threshold and a distance threshold derivation relationship, where the reference distance threshold and the distance threshold derivation relationship are used to determine a third distance threshold corresponding to an orbit of a non-terrestrial network device corresponding to a first cell, the first cell is a neighboring cell of a terminal device, and the first cell is a non-terrestrial network NTN cell; and
sending the reference distance threshold and/or the distance threshold derivation relationship.

In a possible design, the distance threshold derivation relationship includes a first correspondence between different latitude ranges and distance threshold adjustment values for a co-orbit type, and/or a second correspondence between different latitude ranges and distance threshold adjustment values for a non-co-orbit type, where the reference distance threshold and the distance threshold adjustment value are used to determine the third distance threshold.

In a possible design, the reference distance threshold is a distance threshold used by the terminal device within a first latitude range.

In a possible design, when the orbit of the non-terrestrial network device corresponding to the first cell is the same as an orbit of a non-terrestrial network device corresponding to a serving cell of the terminal device, the third distance threshold is determined based on the reference distance threshold, the first correspondence, and a latitude range of the terminal device; and/or
when the orbit of the non-terrestrial network device corresponding to the first cell is different from the orbit of the non-terrestrial network device corresponding to the serving cell of the terminal device, the third distance threshold is determined based on the reference distance threshold, the second correspondence, and the latitude range of the terminal device.

In a possible design, the distance threshold derivation relationship includes a third correspondence between different orbital spacings and distance threshold adjustment values.

In a possible design, the reference distance threshold is a distance threshold corresponding to an orbit of a non-terrestrial network device corresponding to a serving cell of the terminal device.

In a possible design, the third distance threshold is determined based on the reference distance threshold, the third correspondence, and an orbital spacing between the orbit of the non-terrestrial network device corresponding to the first cell and the orbit of the non-terrestrial network device corresponding to the serving cell of the terminal device.

In a possible design, the method further includes:
sending reference distance threshold update information and/or distance threshold derivation relationship update information, where the reference distance threshold update information is used to update the reference distance threshold, and/or the distance threshold derivation relationship update information is used to update the distance threshold derivation relationship.

According to a fifth aspect, this application provides a communication apparatus. The communication apparatus is a terminal device, or a module or chip in the terminal device. The communication apparatus includes:

a transceiver unit, configured to receive distance threshold information, where the distance threshold information indicates distance thresholds corresponding to different orbit types, and/or distance thresholds corresponding to different orbits, and/or distance thresholds corresponding to different cells, the orbit is an orbit of a non-terrestrial network device, and the cell is a non-terrestrial network NTN cell; and
a processing unit, configured to determine, based on the distance threshold information, whether to perform measurement and/or cell reselection.

In a possible design, the distance threshold information indicates the distance thresholds corresponding to the different cells; and when determining, based on the distance threshold information, whether to perform measurement and/or cell reselection, the processing unit is configured to:

determine, based on the distance threshold information, a first distance threshold corresponding to a first cell, where the first cell is a neighboring cell of the terminal device; and
determine, based on the first distance threshold, whether to perform measurement on the first cell and/or whether to reselect to the first cell.

In a possible design, the distance threshold information indicates the distance thresholds corresponding to the different orbit types and/or the distance thresholds corresponding to the different orbits; and when determining, based on the distance threshold information, whether to perform measurement and/or cell reselection, the processing unit is configured to:

determine, based on the distance threshold information, a second distance threshold corresponding to an orbit of a non-terrestrial network device corresponding to a first cell, where the first cell is a neighboring cell of the terminal device; and
determine, based on the second distance threshold, whether to perform measurement on the first cell and/or whether to reselect to the first cell.

In a possible design, the distance threshold information includes the distance thresholds corresponding to the different orbit types, and/or the distance thresholds corresponding to the different orbits, and/or the distance thresholds corresponding to the different cells; or
the distance threshold information includes a reference distance threshold, and distance threshold adjustment values corresponding to the different orbit types, and/or distance threshold adjustment values corresponding to the different orbits, and/or distance threshold adjustment values corresponding to the different cells, where the reference distance threshold and the distance threshold adjustment values corresponding to the different orbit types are used to determine the distance thresholds corresponding to the different orbit types, the reference distance threshold and the distance threshold adjustment values corresponding to the different orbits are used to determine the distance thresholds corresponding to the different orbits, and the reference distance threshold and the distance threshold adjustment values corresponding to the different cells are used to determine the distance thresholds corresponding to the different cells.

In a possible design, the reference distance threshold is a distance threshold corresponding to an orbit of a non-terrestrial network device corresponding to a serving cell of the terminal device.

In a possible design, the distance threshold information indicates the distance thresholds corresponding to the different orbit types, and the different orbit types include a co-orbit type and a non-co-orbit type; and

when the orbit of the non-terrestrial network device corresponding to the first cell is the same as the orbit of the non-terrestrial network device corresponding to the serving cell of the terminal device, the second distance threshold is a distance threshold corresponding to the co-orbit type; or
when the orbit of the non-terrestrial network device corresponding to the first cell is different from the orbit of the non-terrestrial network device corresponding to the serving cell of the terminal device, the second distance threshold is a distance threshold corresponding to the non-co-orbit type.

In a possible design, the transceiver unit is further configured to:
receive distance threshold update information, where the distance threshold update information is used to update the distance thresholds corresponding to the different orbit types, and/or the distance thresholds corresponding to the different orbits, and/or the distance thresholds corresponding to the different cells.

According to a sixth aspect, this application provides a communication apparatus. The communication apparatus is a terminal device, or a module or chip in the terminal device. The communication apparatus includes:

a processing unit, configured to determine, based on a reference distance threshold and a distance threshold derivation relationship, a third distance threshold corresponding to an orbit of a non-terrestrial network device corresponding to a first cell, where the first cell is a neighboring cell of the terminal device, and the first cell is a non-terrestrial network NTN cell, where
the processing unit is configured to determine, based on the third distance threshold, whether to perform measurement on the first cell and/or whether to reselect to the first cell.

In a possible design, the distance threshold derivation relationship includes a first correspondence between different latitude ranges and distance threshold adjustment values for a co-orbit type, and/or a second correspondence between different latitude ranges and distance threshold adjustment values for a non-co-orbit type, where the reference distance threshold and the distance threshold adjustment value are used to determine the third distance threshold.

In a possible design, the reference distance threshold is a distance threshold used by the terminal device within a first latitude range.

In a possible design, when the orbit of the non-terrestrial network device corresponding to the first cell is the same as an orbit of a non-terrestrial network device corresponding to a serving cell of the terminal device, the third distance threshold is determined based on the reference distance threshold, the first correspondence, and a latitude range of the terminal device; and/or
when the orbit of the non-terrestrial network device corresponding to the first cell is different from the orbit of the non-terrestrial network device corresponding to the serving cell of the terminal device, the third distance threshold is determined based on the reference distance threshold, the second correspondence, and the latitude range of the terminal device.

In a possible design, the distance threshold derivation relationship includes a third correspondence between different orbital spacings and distance threshold adjustment values.

In a possible design, the reference distance threshold is a distance threshold corresponding to an orbit of a non-terrestrial network device corresponding to a serving cell of the terminal device.

In a possible design, the third distance threshold is determined based on the reference distance threshold, the third correspondence, and an orbital spacing between the orbit of the non-terrestrial network device corresponding to the first cell and the orbit of the non-terrestrial network device corresponding to the serving cell of the terminal device.

In a possible design, the reference distance threshold and/or the distance threshold derivation relationship are/is predefined, preconfigured, configured by an access network device, or configured by a non-terrestrial network device.

In a possible design, the apparatus further includes a transceiver unit, and the transceiver unit is configured to:
receive reference distance threshold update information and/or distance threshold derivation relationship update information, where the reference distance threshold update information is used to update the reference distance threshold, and/or the distance threshold derivation relationship update information is used to update the distance threshold derivation relationship.

According to a seventh aspect, this application provides a communication apparatus. The communication apparatus may be a network device, or a module or chip in the network device. The communication apparatus includes:

a processing unit, configured to determine distance threshold information, where the distance threshold information indicates distance thresholds corresponding to different orbit types, and/or distance thresholds corresponding to different orbits, and/or distance thresholds corresponding to different cells, the orbit is an orbit of a non-terrestrial network device, and the cell is a non-terrestrial network NTN cell; and
a transceiver unit, configured to send the distance threshold information.

In a possible design, the distance threshold information includes the distance thresholds corresponding to the different orbit types, and/or the distance thresholds corresponding to the different orbits, and/or the distance thresholds corresponding to the different cells; or
the distance threshold information includes a reference distance threshold, and distance threshold adjustment values corresponding to the different orbit types, and/or distance threshold adjustment values corresponding to the different orbits, and/or distance threshold adjustment values corresponding to the different cells, where the reference distance threshold and the distance threshold adjustment values corresponding to the different orbit types are used to determine the distance thresholds corresponding to the different orbit types, the reference distance threshold and the distance threshold adjustment values corresponding to the different orbits are used to determine the distance thresholds corresponding to the different orbits, and the reference distance threshold and the distance threshold adjustment values corresponding to the different cells are used to determine the distance thresholds corresponding to the different cells.

In a possible design, the reference distance threshold is a distance threshold corresponding to an orbit of a non-terrestrial network device corresponding to a serving cell of a terminal device.

In a possible design, the transceiver unit is further configured to:
send distance threshold update information, where the distance threshold update information is used to update the distance thresholds corresponding to the different orbit types, and/or the distance thresholds corresponding to the different orbits, and/or the distance thresholds corresponding to the different cells.

According to an eighth aspect, this application provides a communication apparatus. The communication apparatus may be a network device, or a module or chip in the network device. The communication apparatus includes:

a processing unit, configured to determine a reference distance threshold and a distance threshold derivation relationship, where the reference distance threshold and the distance threshold derivation relationship are used to determine a third distance threshold corresponding to an orbit of a non-terrestrial network device corresponding to a first cell, the first cell is a neighboring cell of a terminal device, and the first cell is a non-terrestrial network NTN cell; and
a transceiver unit, configured to send the reference distance threshold and/or the distance threshold derivation relationship.

In a possible design, the distance threshold derivation relationship includes a first correspondence between different latitude ranges and distance threshold adjustment values for a co-orbit type, and/or a second correspondence between different latitude ranges and distance threshold adjustment values for a non-co-orbit type, where the reference distance threshold and the distance threshold adjustment value are used to determine the third distance threshold.

In a possible design, the reference distance threshold is a distance threshold used by the terminal device within a first latitude range.

In a possible design, when the orbit of the non-terrestrial network device corresponding to the first cell is the same as an orbit of a non-terrestrial network device corresponding to a serving cell of the terminal device, the third distance threshold is determined based on the reference distance threshold, the first correspondence, and a latitude range of the terminal device; and/or when the orbit of the non-terrestrial network device corresponding to the first cell is different from the orbit of the non-terrestrial network device corresponding to the serving cell of the terminal device, the third distance threshold is determined based on the reference distance threshold, the second correspondence, and the latitude range of the terminal device.

In a possible design, the distance threshold derivation relationship includes a third correspondence between different orbital spacings and distance threshold adjustment values.

In a possible design, the reference distance threshold is a distance threshold corresponding to an orbit of a non-terrestrial network device corresponding to a serving cell of the terminal device.

In a possible design, the third distance threshold is determined based on the reference distance threshold, the third correspondence, and an orbital spacing between the orbit of the non-terrestrial network device corresponding to the first cell and the orbit of the non-terrestrial network device corresponding to the serving cell of the terminal device.

In a possible design, the transceiver unit is further configured to:
send reference distance threshold update information and/or distance threshold derivation relationship update information, where the reference distance threshold update information is used to update the reference distance threshold, and/or the distance threshold derivation relationship update information is used to update the distance threshold derivation relationship.

According to a ninth aspect, this application provides a communication apparatus. The communication apparatus includes a processor, and the processor is configured to execute a computer program, to enable the communication apparatus to perform the method according to any design of any one of the first aspect to the fourth aspect.

In a possible design, the communication apparatus may be a chip implementing the method according to any one of the first aspect to the fourth aspect, or a device including the chip.

In a possible design, the communication apparatus further includes a transceiver. The processor is coupled to the transceiver.

In a possible design, the communication apparatus further includes a memory. The processor is coupled to the memory, the memory stores a computer program, and the processor is further configured to invoke the computer program in the memory. For example, the processor and the memory may alternatively be integrated together.

According to a tenth aspect, this application provides a communication apparatus. The communication apparatus includes a processor, and the processor is configured to implement the method according to any design of any one of the first aspect to the fourth aspect by using a logic circuit or executing code instructions.

Optionally, the communication apparatus further includes an interface circuit. The interface circuit is configured to receive a signal from a communication apparatus other than the communication apparatus and transmit the signal to the processor, or send a signal from the processor to the communication apparatus other than the communication apparatus.

According to an eleventh aspect, this application provides a computer-readable storage medium. The storage medium stores a computer program or instructions. When the computer program or the instructions are executed by a computer, the method according to any design of any one of the first aspect to the fourth aspect is implemented.

According to a twelfth aspect, this application provides a computer program product. When a computer reads and executes the computer program product, the computer is enabled to perform the method according to any design of any one of the first aspect to the fourth aspect.

According to a thirteenth aspect, this application provides a communication system. The communication system includes a communication apparatus configured to implement the method according to any design in the first aspect or the second aspect, and includes a communication apparatus configured to implement the method according to any design in the third aspect or the fourth aspect.

For beneficial effect of the third aspect to the thirteenth aspect, refer to the beneficial effect of the first aspect and the second aspect. Details are not described herein.

## BRIEF DESCRIPTION OF DRAWINGS

FIG. 1 is a diagram of an architecture of a communication system to which an embodiment of this application is applied;

FIG. 2a to FIG. 2d are diagrams of NTN-based RAN architectures to which embodiments of this application are applicable;

FIG. 3 is a diagram of a quasi-earth-fixed NTN cell;

FIG. 4 is a diagram of an earth-moving NTN cell;

FIG. 5 is a diagram of coverage of a co-orbit neighboring cell, a non-co-orbit neighboring cell, and a serving cell;

FIG. 6 is a schematic flowchart of a communication method according to an embodiment of this application;

FIG. 7 is another schematic flowchart of a communication method according to an embodiment of this application;

FIG. 8 is a diagram of a possible structure of a communication apparatus according to an embodiment of this application; and

FIG. 9 is a diagram of a possible structure of a communication apparatus according to an embodiment of this application.

## DESCRIPTION OF EMBODIMENTS

The following further describes specific embodiments of this application in detail with reference to accompanying drawings.

Terms "first", "second", and the like in the specification, claims, and accompanying drawings of this application are used to distinguish between different objects, and are not used to describe a specific sequence. In addition, terms "include", "have", and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"An embodiment" mentioned in the specification indicates that a particular characteristic, structure, or feature described with reference to the embodiment may be included in at least one embodiment of this application. The phrase appearing in various locations in the specification does not necessarily mean a same embodiment, and neither means an independent or alternative embodiment mutually exclusive with another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between associated objects. "At least one of the following items (pieces)" or a similar expression thereof refers to any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

In this application, "sending information to... (for example, a terminal)" may be understood as that a destination end of the information is the terminal, and may include directly or indirectly sending the information to the terminal. "Receiving information from... (for example, a terminal)" or "receiving information that is from... (for example, a terminal)" may be understood as that a source end of the information is the terminal, and may include directly or indirectly receiving the information from the terminal. Information may undergo necessary processing, for example, a format change, between a source end and a destination end of information sending. However, the destination end may understand valid information from the source end. Similar expressions in this application may be understood similarly, and details are not described herein again.

To better understand embodiments of this application, the following first describes a system architecture in embodiments of this application.

Technical solutions of this application may be applied to a non-terrestrial network (non-terrestrial network, NTN) or a scenario in which an NTN and a terrestrial network (terrestrial network, TN) are integrated. An NTN system may be, for example, a satellite communication system, a high-altitude platform (high-altitude platform station, HAPS) communication system, or a global navigation satellite system (global navigation satellite system, GNSS). A TN system may be, for example, a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a 6th generation mobile communication (6th generation mobile communication, 6G) system, or a future mobile communication system.

The communication system provided in this application may include one or more network devices and one or more terminals.

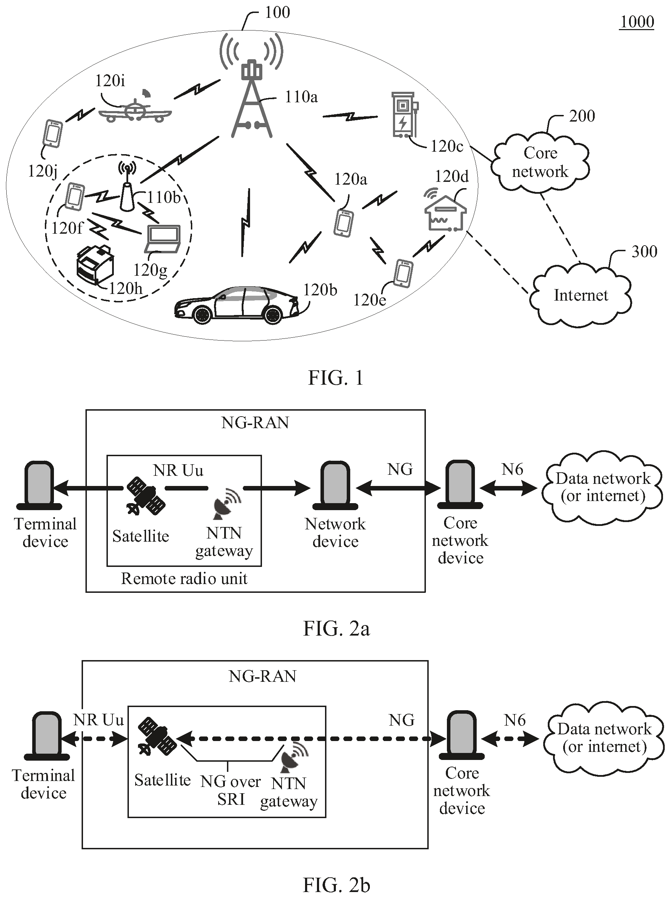

The following uses a system architecture shown in FIG. 1 as an example for description. FIG. 1 is a diagram of an architecture of a communication system to which an embodiment of this application is applied. As shown in FIG. 1, the communication system 1000 includes a radio access network (radio access network, RAN) 100 and a core network (core network, CN) 200. For example, the communication system 1000 may further include the internet 300. The RAN 100 includes at least one network device (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

It should be noted that the RAN 100 may be a cellular system related to the 3rd generation partnership project (3rd generation partnership project, 3GPP), for example, a 4G mobile communication system, a 5G mobile communication system, or a system evolved after 5G (for example, a 6G mobile communication system). The RAN 100 may alternatively be an open access network (open RAN, O-RAN, or ORAN), a cloud radio access network (cloud radio access network, CRAN), or the like. The RAN 100 may alternatively be a communication system that integrates two or more of the foregoing systems. It should be noted that quantities of network devices and terminals in FIG. 1 are merely examples, and should not be considered as a specific limitation on this application. The following describes in detail the terminal and the network device that are related to the system architecture.

1. Terminal

The terminal may also be referred to as a terminal device, user equipment (user equipment, UE), a mobile station (mobile station, MS), a mobile terminal (mobile terminal, MT), a mobile terminal device, mobile equipment (mobile equipment, ME), an access terminal, a subscriber unit, a subscriber station, a remote station, a remote terminal, a user terminal, a wireless communication device, a user agent, a user apparatus, or the like. Alternatively, the terminal is a device configured to provide voice or data connectivity for a user, or may be an internet of things device. For example, the terminal device includes a hand-held device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, or a pedometer), a vehicle-mounted device (for example, a car, a bicycle, an electric vehicle, an airplane, a ship, a train, or a high-speed train), a satellite terminal device, a virtual reality (virtual reality, VR) device, an augmented reality (augmented reality, AR) device, a smart point of sale (point of sale, POS) machine, customer premises equipment (customer premises equipment, CPE), a wireless terminal device in industrial control, a smart home device (for example, a refrigerator, a television, an air conditioner, or an electricity meter), a smart robot, a robot arm, a workshop device, a wireless terminal device in self-driving, a wireless terminal device in telemedicine, a wireless terminal device in a smart grid (smart grid), a wireless terminal device in transportation safety, a wireless terminal device in a smart city, a wireless terminal device in a smart home, a flight device (for example, a smart robot, a hot air balloon, an uncrewed aerial vehicle, or an airplane), or the like. The terminal device may alternatively be another device having a terminal device function. For example, the terminal device may alternatively be a device that functions as a terminal device in D2D communication.

In addition, the terminal device in embodiments of this application is a terminal device that supports an NTN access technology or has an NTN capability.

A device form of the terminal device is not limited in embodiments of this application. An apparatus for implementing a function of the terminal device may be a terminal device, or may be an apparatus, for example, a chip system, that can support the terminal device in implementing the function. The apparatus may be mounted in the terminal device or used together with the terminal device. In embodiments of this application, the chip system may include a chip, or may include a chip and another discrete component.

2. Network device

The network device is a node in a radio access network (radio access network, RAN), and may also be referred to as an access network device, or may also be referred to as a RAN node (or device). The network device is configured to help the terminal device implement wireless access. A plurality of network devices 110 in the communication system 1000 may be nodes of a same type, or may be nodes of different types. In some scenarios, roles of the network device 110 and the terminal 120 are relative. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal device. The network device 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal device function.

In a possible scenario, the network device may be a device having a base station function, for example, an evolved NodeB (evolved NodeB, eNodeB), a transmission reception point (transmission reception point, TRP), a transmission point (transmission point, TP), a next generation NodeB (next generation NodeB, gNB), a next generation base station in a 6G mobile communication system, or an integrated access and backhaul (integrated access and backhaul, IAB) node.

In a possible scenario, the network device may alternatively be a non-terrestrial network device in an NTN, for example, may be a device deployed on a high-altitude platform, for example, a satellite. The network device may alternatively be a macro base station (for example, 110a in FIG. 1), a micro base station or an indoor base station (for example, 110b in FIG. 1), a relay node or a donor node, or a radio controller in a CRAN scenario. The network device may alternatively be a device that functions as a base station in device-to-device (device-to-device, D2D) communication, internet of vehicles communication, uncrewed aerial vehicle communication, or machine communication. For example, the network device may alternatively be a server, a wearable device, a vehicle, a vehicle-mounted device, or the like. For example, a network device in a vehicle-to-everything (vehicle-to-everything, V2X) technology may be a roadside unit (roadside unit, RSU).

All or some functions of the network device in this application may alternatively be implemented by using a software function running on hardware, or may be implemented by using a virtualized function instantiated on a platform (for example, a cloud platform). The network device in this application may alternatively be a logical node, a logical module, or software that can implement all or some functions of the network device.

In another possible scenario, a plurality of network devices collaborate to assist a terminal device in implementing wireless access, and different network devices separately implement parts of functions of a base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

A form of the network device is not limited in embodiments of this application. An apparatus for implementing a function of the network device may be a network device, or may be an apparatus, for example, a chip system, that can support the network device in implementing the function. The apparatus may be mounted in the network device or used together with the network device.

To facilitate understanding of content of the solutions, the following further explains and describes some terms in embodiments of this application, to facilitate understanding by a person skilled in the art. This part is merely for ease of understanding, and cannot be considered as a specific limitation on this application.

I. NTN

The NTN is a non-terrestrial network, is a general term for networks including flying objects, and includes a satellite communication network, a high-altitude platform station (high-altitude platform station, HAPS), and an air-to-ground network.

The HAPS is carried on an airborne platform, and mainly includes an airplane, a balloon, and an airship. The high-altitude platform station serves as a mobile communication base station and provides a mobile service by using a same frequency band as a terrestrial mobile network. In other words, the NTN provides communication coverage for a terminal device by deploying a base station or a part of functions of the base station on a non-terrestrial network device (for example, a ship, a high-altitude platform, an uncrewed aerial vehicle, or a satellite), to improve reliability of a communication system. It should be noted that, for ease of understanding, only an example in which the non-terrestrial network device in the NTN is a satellite is used below for description, and this should not be considered as a specific limitation on this application.

The satellite communication network relies on a satellite-borne platform, and mainly includes a low earth orbit (low earth orbit, LEO) satellite, a medium earth orbit (medium earth orbit, MEO) satellite, and a geostationary earth orbit (geostationary earth orbit, GEO) satellite. Based on a relationship between satellites and base stations, the following several architectures may be obtained through classification.

For example, FIG. 2a to FIG. 2d are diagrams of NTN-based RAN architectures to which embodiments of this application are applicable. As shown in FIG. 2a to FIG. 2d, the NTN-based RAN architecture may include a terminal device, a RAN (or referred to as an NG-RAN), a core network device, and a data network (or the internet).

FIG. 2a shows an architecture of a transparent satellite (transparent satellite). A RAN may include a remote radio unit (remote radio unit, RRU) and a network device. An RRU may include a satellite and an NTN gateway (gateway). A terminal device communicates with a network device through a universal terrestrial radio access network-user (universal terrestrial radio access network-user, Uu) interface. The satellite may implement transparent payload transmission between a user and the network device. The satellite and the NTN gateway may be considered as remote radio units (remote radio units) of the network device, and implement transparent forwarding of a signal. In other words, the satellite supports functions such as radio frequency filtering, frequency conversion, and amplification, with a signal waveform remaining unchanged. Forwarding of the satellite is transparent to the terminal device, in other words, the satellite mainly serves as a relay device (L1 relay) of a layer 1 (L1 for short), is configured to regenerate (that is, perform wireless frequency filtering, frequency conversion, and amplification on) a physical layer signal, and does not have another higher protocol layer. The network device and a core network device may communicate with each other through a next generation (next generation, NG) interface, and exchange non-access stratum (non-access stratum, NAS) signaling of a core network and service data of the terminal device through the NG interface.

FIG. 2b shows an architecture of a regenerative satellite without an inter-satellite link (regenerative satellite without inter-satellite link). A RAN includes the satellite and an NTN gateway. The satellite serves as a network device (for example, a base station) and has a processing function of the base station. The satellite communicates with the NTN gateway through a satellite radio interface (satellite radio interface, SRI). A terminal device communicates with the network device through a Uu interface. The network device and a core network device may communicate with each other through an NG interface, and exchange NAS signaling of a core network and service data of the terminal device through the NG interface.

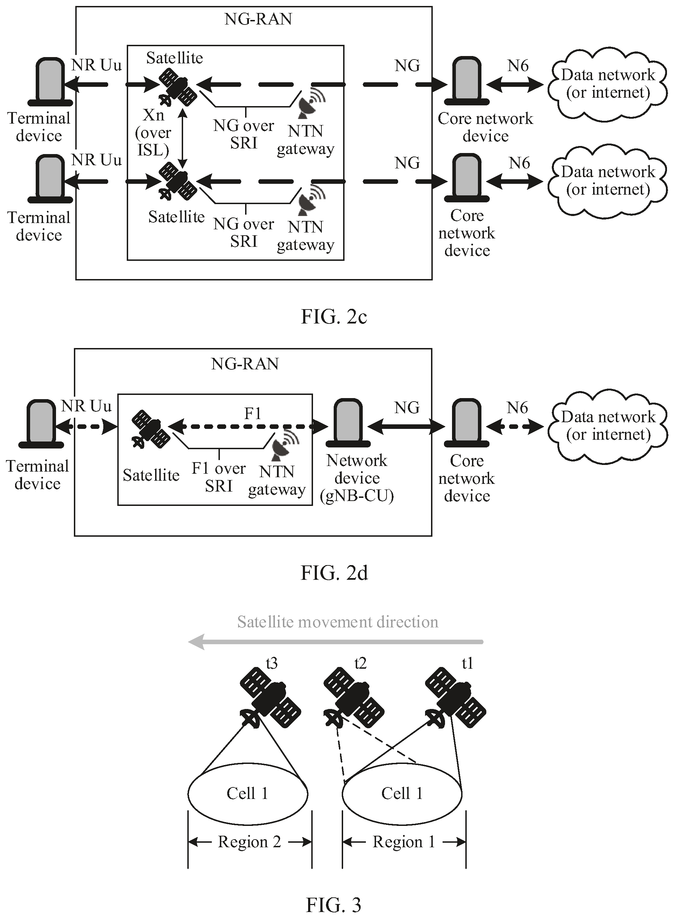

FIG. 2c shows an architecture of a regenerative satellite with an inter-satellite link (regenerative satellite with inter-satellite link). A RAN includes the satellite and an NTN gateway. The satellite serves as a network device (for example, a base station) and has a processing function of the base station. The satellite communicates with the NTN gateway through an SRI. Satellites may communicate with each other through an Xn interface on an inter-satellite link (inter-satellite link, ISL). A terminal device communicates with the network device through a Uu interface. The network device and a core network device may communicate with each other through an NG interface, and exchange NAS signaling of a core network and service data of the terminal device through the NG interface.

FIG. 2d shows an architecture of a regenerative satellite with a DU processing function of a base station. The satellite serves as a DU and has the DU processing function. A CU and the DU may jointly complete a function of a network device (for example, the base station). The CU communicates with the DU through an F1 interface, and the DU communicates with an NTN gateway through an F1 interface on an SRI. A terminal device communicates with the DU through a Uu interface. The CU and a core network device may communicate with each other through an NG interface, and exchange NAS signaling of a core network and service data of the terminal device through the NG interface.

For example, in an architecture of a satellite having an integrated access and backhaul (integrated access and backhaul, IAB) function, the satellite serves as an IAB node. The IAB node is configured to provide a wireless backhaul (backhaul) service for a node (for example, a terminal device) that wirelessly accesses a wireless backhaul node. The wireless backhaul service is a data and/or signaling backhaul service provided through a wireless backhaul link.

II. NTN cell

Based on movement statuses of NTN cells in terrestrial coverage regions, the NTN cells may be classified into the following three types:

1. Earth-fixed (earth-fixed): A coverage region of this type of NTN cell is fixed to a specific region on the ground, that is, continuous fixed-point coverage is provided. An NTN cell provided by a GEO satellite is of this type.

2. Quasi-earth-fixed (quasi-earth-fixed): A coverage region of this type of NTN cell is fixed to a specific region on the ground within a period of time, and is changed to another region on the ground after the period of time, that is, fixed-point coverage within a time period is provided, as shown in FIG. 3. LEO and MEO satellites may provide this type of NTN cell.

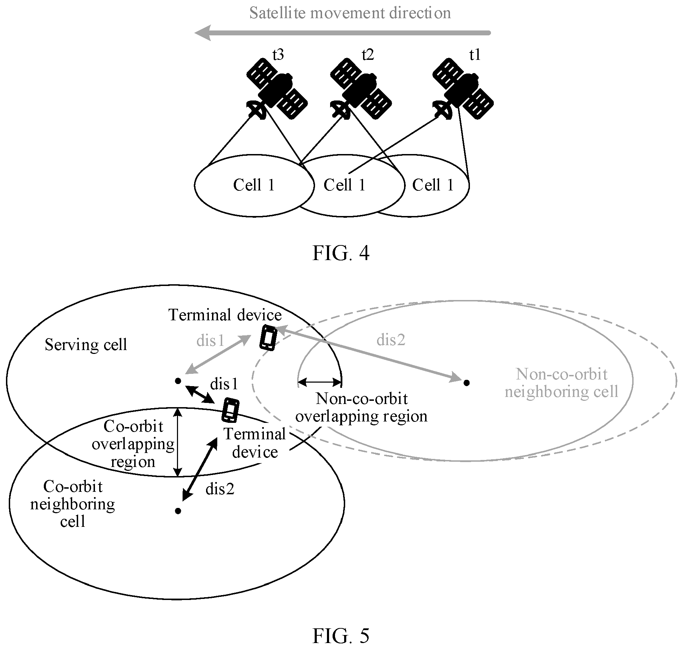

3. Earth-moving (earth-moving): A coverage region of this type of NTN cell slides on the ground, as shown in FIG. 4. LEO and MEO satellites may provide this type of NTN cell.

III. Reference point of a cell

The reference point of the cell may be a nadir (nadir) of a satellite corresponding to the cell, a nadir of a satellite that provides coverage of the cell, a center point of the cell, a reference point configured by a network, or the like. This is not limited in this application. The nadir of the satellite may be a point at which a connection line between the satellite and the earth center intersects with the surface of the earth, and the center point of the cell may be a center point of a coverage range of the cell.

IV. Co-orbit and non-co-orbit

The co-orbit and the non-co-orbit are both defined with reference to an orbit of a satellite of a serving cell of a terminal device. Usually, an orbit that is the same as the orbit of the satellite of the serving cell is referred to as a co-orbit, and an orbit that is different from the orbit of the satellite of the serving cell is referred to as a non-co-orbit. Herein, the non-co-orbit may generally refer to an orbit that is different, not limited to whether orbit heights are consistent. For example, a height of the orbit of the satellite of the serving cell is H0, and an orbit 1 (a height is also H0) and an orbit 2 (a height is H1) that are different from the orbit are present. Both the orbit 1 and the orbit 2 may be referred to as non-co-orbits of the orbit of the satellite of the serving cell.

V. RRM measurement and cell reselection

Mobility management is an important operation in wireless mobile communication, and means that when signal quality of a serving cell of a terminal device deteriorates to a specific level, the serving cell of the terminal device is changed through handover (behavior of the terminal device in a connected state) or cell selection/-reselection (behavior of the terminal device in a non-connected state), that is, a neighboring cell with better communication quality is selected as a new serving cell of the terminal device, to ensure that a communication link between a network and the terminal device is not interrupted due to movement of the terminal device.

RRM measurement means that a terminal device monitors communication quality of a serving cell and/or a neighboring cell (that is, a non-serving cell) of the terminal device in real time. Handover and cell selection/reselection in the mobility management operation need to be performed based on a measurement result of RRM measurement. Therefore, RRM measurement is a basis of mobility management.

1. RRM measurement and cell reselection for a terrestrial network communication system

(1-1) In the terrestrial network communication system, for RRM measurement, a network device may configure a quality threshold, and a terminal device determines, by evaluating whether quality of a serving cell meets the quality threshold configured by the network device, whether to start neighboring cell measurement.

(1-2) In the terrestrial network communication system, for cell reselection, the network may also configure a quality threshold, and the terminal device determines, by evaluating whether quality of the serving cell and/or quality of a neighboring cell meet/meets the quality threshold configured by the network device, whether reselection can be performed to a specific cell.

2. RRM measurement and cell reselection for a non-terrestrial network communication system

(2-1) In the non-terrestrial network communication system, for RRM measurement, whether a terminal device needs to measure a surrounding neighboring cell may be controlled based on some conditions, so that the terminal device starts measurement only when necessary. This avoids unnecessary measurement operations and a waste of power consumption of the terminal device. For example, in addition to a cell signal quality factor, a distance factor may also be considered to control start and stop of neighboring cell measurement. Details are as follows:

A network device may configure a quality threshold and a distance threshold. Based on the quality threshold, the terminal device further evaluates whether a distance between a position of the terminal device and a reference point (for example, a nadir of a satellite of a serving cell or a neighboring cell) of a satellite cell meets the configured distance threshold, to determine whether to start neighboring cell measurement. A detailed mechanism is described as follows:

(2-1-i) The terminal device evaluates whether quality of the serving cell meets the quality threshold (which may be referred to as an S threshold) condition configured by the network device:

For intra-frequency frequency measurement, the network device configures two quality thresholds SIntraSearchP (reference signal received power (reference signal received power, RSRP) threshold) and SIntraSearchQ (reference signal received quality (reference signal received quality, RSRQ) threshold). When RSRP quality Srxlev of the serving cell is greater than the threshold SIntraSearchP, and RSRQ quality Squal of the serving cell is greater than the threshold SIntraSearchQ, it is considered that a quality threshold condition corresponding to an intra-frequency frequency is met.

For inter-frequency and inter-RAT (inter-RAT) frequency measurement, the network device configures two quality thresholds SnonIntraSearchP (RSRP threshold) and SnonIntraSearchQ (RSRQ threshold). When RSRP quality Srxlev of the serving cell is greater than the threshold SnonIntraSearchP, and RSRQ quality Squal of the serving cell is greater than the threshold SnonIntraSearchQ, it is considered that a quality threshold condition corresponding to an inter-frequency/inter-RAT (inter-RAT) frequency is met.

When the quality threshold condition in (2-1-i) is met, the terminal device additionally determines whether a distance threshold condition in the following (2-1-ii) is met, and finally determines whether a frequency of the neighboring cell needs to be measured.

(2-1-ii) The terminal device evaluates whether the distance threshold condition configured by the network device is met.

If a distance between the terminal device and a reference point (for example, a nadir of a satellite) of the serving cell minus a distance between the terminal device and a reference point (for example, a nadir of a satellite) of the neighboring cell is less than or equal to the distance threshold, the terminal device may not measure the intra-frequency frequency and an equal/low-priority inter-frequency/inter-RAT (inter-RAT) frequency.

If the distance between the terminal device and the reference point (for example, the nadir of the satellite) of the serving cell minus the distance between the terminal device and the reference point (for example, the nadir of the satellite) of the neighboring cell is greater than the distance threshold, the terminal device needs to measure the intra-frequency frequency and the equal/low-priority inter-frequency/inter-RAT (inter-RAT) frequency.

Herein, the network device may set a priority for each frequency. A frequency of the serving cell on which the terminal device currently camps is used as a reference. A priority of the frequency (that is, the inter-frequency frequency or inter-RAT frequency) of the neighboring cell may be higher than, equal to, or lower than the priority of the frequency of the current serving cell. Therefore, another frequency may be referred to as a high-priority frequency, an equal-priority frequency, or a low-priority frequency.

(2-2) In the non-terrestrial network communication system, for cell reselection, in addition to a cell signal quality factor, a distance factor may be additionally considered, so that the terminal device may select a more appropriate NTN neighboring cell as a new serving cell. This ensures mobility performance. Details are as follows:

The network device may configure a quality threshold and a distance threshold. On a basis that the quality threshold is met, when determining a target cell for reselection, the terminal device further needs to consider whether the distance between the position of the terminal device and the reference point (for example, the nadir of the satellite of the serving cell or the neighboring cell) of the satellite cell meets the configured distance threshold, to finally determine whether reselection can be performed to a specific cell. A detailed mechanism is described as follows:

(2-2-i) Reselection for a neighboring cell with a low-priority frequency:

If the network device provides an RSRQ quality threshold $Thresh_{Serving, LowQ}$, RSRQ quality of the serving cell meets $Squal<Thresh_{Serving, LowQ}$ and RSRQ quality of the neighboring cell meets $Squal>Thresh_{X, LowQ}$ within a period of time $Treselection_{RAT}$, and the distance between the terminal device and the reference point (for example, the nadir of the satellite) of the serving cell minus a distance between the terminal device and a reference point (for example, a nadir of a satellite) of the neighboring cell is greater than the distance threshold, it is considered that the neighboring cell is the target cell for reselection.

If the network device does not provide the RSRQ quality threshold $Thresh_{Serving, LowQ}$ but provides only an RSRP quality threshold $Thresh_{Serving, LowP}$, RSRP quality of the serving cell meets $Srxlev<Thresh_{Serving, LowP}$ and RSRP quality of the neighboring cell meets $Srxlev>Thresh_{X, LowP}$ within a period of time $Treselection_{RAT}$, and the distance between the terminal device and the reference point (for example, the nadir of the satellite) of the serving cell minus the distance between the terminal device and the reference point (for example, the nadir of the satellite) of the neighboring cell is greater than the distance threshold, it is considered that the neighboring cell is the target cell for reselection.

(2-2-ii) Reselection for an intra-frequency neighboring cell or an equal-priority inter-frequency/inter-RAT (inter-RAT) neighboring cell:

If quality of the neighboring cell meets an S criterion (that is, RSRP quality Srxlev of the cell is greater than 0 and RSRQ quality Squal of the cell is greater than 0), and the distance between the terminal device and the reference point (for example, the nadir of the satellite) of the serving cell minus a distance between the terminal device and a reference point (for example, a nadir of a satellite) of the neighboring cell is greater than the distance threshold, the terminal device sorts one or more neighboring cells that meet the condition and the serving cell.

It should be understood that, an R criterion is used during sorting, an R value (that is, $R_s$) of the serving cell and an R value (that is, $R_n$) of the neighboring cell are separately calculated according to the following formulas, and then the corresponding cells are sorted based on the R values. If the terminal device has camped on the current serving cell for more than 1s, and the neighboring cell is continuously better than the serving cell within a period of time $Treselection_{RAT}$, the terminal device uses the neighboring cell as the target cell for reselection.

$$R_s=Q_{meas,s}+Q_{hyst}-Qoffset_{temp}$$

$$R_n=Q_{meas,n}-Q_{offset}-Qoffset_{temp}$$

$Q_{meas,s}$ and $Q_{meas,n}$ are respectively RSRP of the serving cell and RSRP of the neighboring cell, Qoffset is an offset, $Qoffset_{temp}$ is a temporary offset, and $Q_{hyst}$ is a hysteresis value.

It can be learned from the foregoing descriptions in "V. RRM measurement and cell reselection" that, for RRM measurement, for all types of neighboring cells in the NTN communication system, currently, only one distance threshold is used to control start and stop of neighboring cell RRM measurement. Similarly, for cell reselection, for all types of neighboring cells in the NTN communication system, currently, only one distance threshold is used to control cell reselection. In other words, regardless of RRM measurement or cell reselection, the distance threshold condition is controlled without distinguishing whether a satellite corresponding to a specific neighboring cell is a satellite in a same orbit (co-orbit for short) or a satellite in a different orbit (non-co-orbit for short) compared with the satellite of the current serving cell of the terminal device. In practice, a coverage status of a co-orbit neighboring cell is different from that of a non-co-orbit neighboring cell. To be specific, a distance between the co-orbit neighboring cell and the serving cell is short (in other words, an area of an overlapping region between coverage of the co-orbit neighboring cell and coverage of the serving cell is large), and a distance between the non-co-orbit neighboring cell and the serving cell is long (in other words, an overlapping region between coverage of the non-co-orbit neighboring cell and the coverage of the serving cell is small). For RRM measurement, such a manner of using a same distance threshold to control measurement start and stop of different neighboring cells causes inappropriate measurement start time of one of the co-orbit neighboring cell and the non-co-orbit neighboring cell. Similarly, for cell reselection, using a same distance threshold to determine whether different neighboring cells can be used as target cells for cell reselection causes inappropriate selection of a reselected neighboring cell of one of the co-orbit neighboring cell and the non-co-orbit neighboring cell. Therefore, it is not conducive to improving communication performance.

As shown in FIG. 5, for RRM measurement, it is assumed that a network device configures a distance threshold d based on a status of a co-orbit overlapping region. Because a co-orbit neighboring cell is close/an area of the co-orbit overlapping region is large, the distance threshold d is a small value, so that a terminal device can start neighboring cell measurement in time after entering the co-orbit overlapping region. However, based on the distance threshold d, because a non-co-orbit neighboring cell is far away/an area of a non-co-orbit overlapping region is small, when the terminal device actually does not reach the overlapping region between the non-co-orbit neighboring cell and the serving cell, a condition of the distance threshold d can be met (that is, dis1-dis2 is easily greater than d, and being greater than d means that the terminal device is far away from the serving cell and close to the neighboring cell, as shown by a dashed line in FIG. 5). Consequently, non-co-orbit neighboring cell measurement may be unnecessarily started in advance, which causes a waste of power consumption of the terminal device. On the contrary, it is assumed that the network device configures a distance threshold d based on a status of a non-co-orbit overlapping region. In this case, the distance threshold d is a large value. Based on the distance threshold d, the terminal device can start co-orbit neighboring cell measurement only after entering deep into a co-orbit overlapping region. Consequently, the terminal device starts co-orbit neighboring cell measurement too late, which affects subsequent cell reselection and is detrimental to mobility performance.

Similarly, with reference again to FIG. 5, for cell reselection, it is assumed that the network device configures a distance threshold d based on a status of a co-orbit overlapping region. Because a co-orbit neighboring cell is close/an area of the co-orbit overlapping region is large, the distance threshold d is a small value. In this case, when determining is performed on a non-co-orbit neighboring cell based on the threshold, when the terminal device actually does not reach coverage of the non-co-orbit neighboring cell, a condition of the distance threshold d can be met (that is, dis1-dis2 is easily greater than d, and being greater than d means that the terminal device is far away from the serving cell and is close to the neighboring cell, as shown by a dashed line in FIG. 5). Therefore, the terminal device incorrectly or prematurely reselects to the non-co-orbit neighboring cell, and a reselection failure occurs. Consequently, the terminal device loses the cell on which the terminal device camps, which affects mobility performance and user experience. Similarly, it is assumed that the network configures a distance threshold d based on a status of a non-co-orbit overlapping region. When determining is performed on a co-orbit neighboring cell based on the threshold, the terminal device determines to reselect to the neighboring cell only after entering deep into coverage of the co-orbit neighboring cell. Therefore, the terminal device reselects to a target cell too late, and quality of the current serving cell may have deteriorated. Consequently, the terminal device loses the cell on which the terminal device camps, which affects mobility performance and user experience.

Based on this, this application provides a communication method. Based on actual coverage statuses of neighboring cells, different orbits/neighboring cells are distinguished to adaptively provide different distance thresholds to control whether a terminal device starts measurement on the orbits/neighboring cells, or different orbits/neighboring cells are distinguished to adaptively provide different distance thresholds to control whether a terminal device uses the orbits/neighboring cells as target cells for cell reselection. This helps improve communication performance.

The following describes in detail communication methods and communication apparatuses provided in this application.

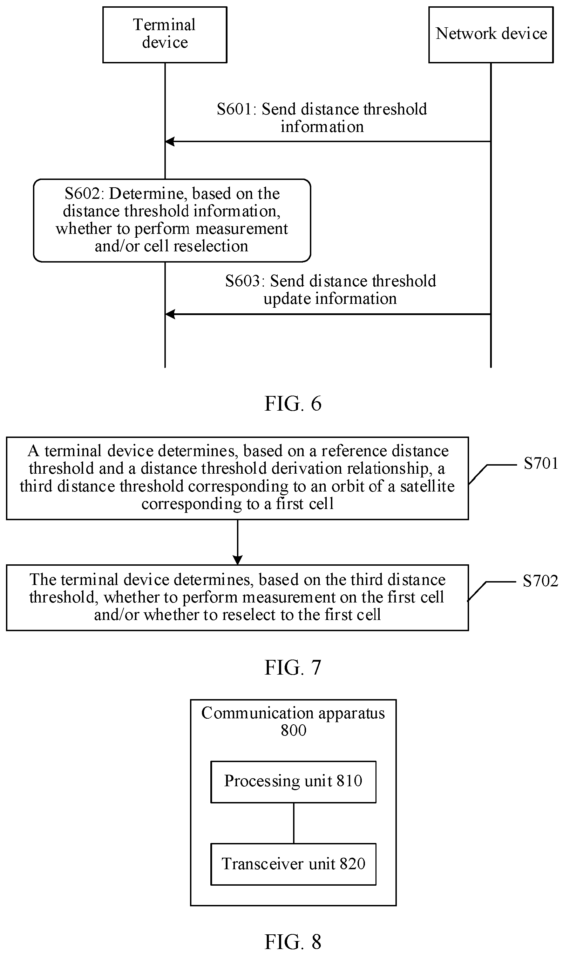

FIG. 6 is a schematic flowchart of a communication method according to an embodiment of this application. As shown in FIG. 6, the communication method includes the following steps S601 to S603. The method shown in FIG. 6 may be performed by a terminal device and a network device, or the method shown in FIG. 6 may be performed by a chip in the terminal device and a chip in the network device. For example, the network device may be a non-terrestrial network device (for example, a satellite), an access network device (for example, a base station), or the like. This is not limited in this application. For ease of description, in FIG. 6, an example in which the method is performed by the terminal device and the network device is mainly used for description. It should be noted that FIG. 6 is a schematic flowchart of a method embodiment of this application, and shows detailed communication steps or operations of the method. However, these steps or operations are merely examples. Other operations or variants of various operations in FIG. 6 may alternatively be performed in embodiments of this application. In addition, the steps in FIG. 6 may be performed in a sequence different from a sequence shown in FIG. 6, and not all operations in FIG. 6 may be performed.

S601: The network device sends distance threshold information to the terminal device. Correspondingly, the terminal device receives the distance threshold information from the network device.

It should be understood that the network device may send the distance threshold information by using broadcast signaling (for example, system information (system information, SI)).

The distance threshold information indicates distance thresholds corresponding to different orbit types, and/or distance thresholds corresponding to different orbits, and/or distance thresholds corresponding to different cells. In embodiments of this application, an orbit is an orbit of a satellite (in operation), and a cell is an NTN cell.

In some feasible implementations, the distance threshold information may directly include the distance thresholds corresponding to the different orbit types, and/or the distance thresholds corresponding to the different orbits, and/or the distance thresholds corresponding to the different cells. In other words, the distance threshold information directly includes a specific value of the distance threshold (that is, an absolute threshold). Usually, this form of absolute threshold may directly provide thresholds corresponding to different orbits/neighboring cells, and the manner is simple.

In some other feasible implementations, the distance threshold information may include a reference distance threshold, and distance threshold adjustment values corresponding to the different orbit types, and/or distance threshold adjustment values corresponding to the different orbits, and/or distance threshold adjustment values corresponding to the different cells. The reference distance threshold and the distance threshold adjustment values corresponding to the different orbit types are used to determine the distance thresholds corresponding to the different orbit types, the reference distance threshold and the distance threshold adjustment values corresponding to the different orbits are used to determine the distance thresholds corresponding to the different orbits, and the reference distance threshold and the distance threshold adjustment values corresponding to the different cells are used to determine the distance thresholds corresponding to the different cells. In other words, a specific value of the distance threshold can be obtained only after an operation is performed based on the reference distance threshold and the corresponding distance threshold adjustment value that are carried in the distance threshold information. For example, assuming that the reference distance threshold is dref, and a distance threshold adjustment value corresponding to a specific orbit/neighboring cell is offset, a threshold d corresponding to the orbit/neighboring cell may satisfy d=dref+offset. Usually, this form of reference distance threshold and distance threshold adjustment value helps reduce signaling overheads during information configuration.

It should be noted that the reference distance threshold in this application may not be carried in the distance threshold information, but may be predefined or preconfigured. In this way, signaling overheads can be further reduced. Similarly, the specific value of the distance threshold may also be obtained by performing an operation based on the predefined or preconfigured reference distance threshold and the distance threshold adjustment value carried in the distance threshold information.

It should be understood that the reference distance threshold may be only a reference value, or may be a distance threshold corresponding to a specific orbit/cell. For example, the reference distance threshold is a distance threshold corresponding to an orbit of a satellite corresponding to a serving cell of the terminal device.

The following describes the distance threshold information in detail.

In an implementation 1, when the distance threshold information indicates the distance thresholds corresponding to the different orbit types (that is, when a granularity of the distance threshold is an orbit type granularity), the distance threshold information may indicate a distance threshold corresponding to a co-orbit type and a distance threshold corresponding to a non-co-orbit type. In other words, the different orbit types include the co-orbit type and the non-co-orbit type.

For example, in the distance threshold information, the co-orbit type corresponds to a distance threshold d0, and the non-co-orbit type corresponds to a distance threshold d1.

For another example, assuming that the reference distance threshold is the distance threshold corresponding to the orbit of the satellite corresponding to the serving cell of the terminal device, in the distance threshold information, the co-orbit type corresponds to a distance threshold dref (that is, a distance threshold adjustment value corresponding to the co-orbit type is 0), and the non-co-orbit type corresponds to a distance threshold adjustment value offset1. Therefore, the distance threshold corresponding to the non-co-orbit type may be determined based on the reference distance threshold and the distance threshold adjustment value corresponding to the non-co-orbit type. For example, the distance threshold corresponding to the non-co-orbit type satisfies d1=dref+offset1.

In another implementation 2, when the distance threshold information indicates the distance thresholds corresponding to the different orbits (that is, when a granularity of the distance threshold is an orbit granularity), the distance threshold information may indicate distance thresholds corresponding to at least two orbits. In other words, independent distance thresholds may be separately configured for the different orbits. For example, an orbit 1 corresponds to a distance threshold d0, an orbit 2 corresponds to a distance threshold d1, and an orbit 3 corresponds to a distance threshold d2.

For example, in the distance threshold information, a co-orbit corresponds to a distance threshold d0, a non-co-orbit 1 corresponds to a distance threshold d1, and a non-co-orbit 2 corresponds to a distance threshold d2.

For another example, assuming that the reference distance threshold is the distance threshold corresponding to the orbit of the satellite corresponding to the serving cell of the terminal device, in the distance threshold information, a co-orbit corresponds to a distance threshold dref (that is, a distance threshold adjustment value corresponding to the co-orbit is 0), a non-co-orbit 1 corresponds to a distance threshold adjustment value offset1, and a non-co-orbit 2 corresponds to a distance threshold adjustment value offset2. Therefore, distance thresholds corresponding to different non-co-orbits may be determined based on the reference distance threshold and distance threshold adjustment values corresponding to the different non-co-orbits. For example, a distance threshold corresponding to the non-co-orbit 1 satisfies d1=dref+offset1, and a distance threshold corresponding to the non-co-orbit 2 satisfies d2=dref+offset2.

In still another implementation 3, when the distance threshold information indicates the distance thresholds corresponding to the different cells (that is, when a granularity of the distance threshold is a cell granularity), the distance threshold information may indicate distance thresholds corresponding to at least two cells. In other words, independent distance thresholds may be separately configured for the different cells. It may be understood that the distance thresholds configured for the different cells may be the same. For example, both a cell 1 and a cell 2 on an orbit 1 correspond to a distance threshold d1, a cell 3 on the orbit 1 corresponds to a threshold d2, a cell 1 on an orbit 2 corresponds to a distance threshold d3, and both a cell 2 and a cell 3 on the orbit 2 correspond to a distance threshold d4. The different cells herein may include different cells on a co-orbit and different cells on a non-co-orbit.

For example, in the distance threshold information, both a cell 1 and a cell 2 on a co-orbit correspond to a distance threshold d1, a cell 3 on the co-orbit corresponds to a threshold d2, a cell 1 on a non-co-orbit 1 corresponds to a distance threshold d3, and both a cell 2 and a cell 3 on the non-co-orbit 1 correspond to a distance threshold d4.

For another example, it is assumed that the reference distance threshold dref is a predefined value that is not related to any orbit/cell. If in the distance threshold information, both a cell 1 and a cell 2 on a co-orbit correspond to a distance threshold offset1, a cell 3 on the co-orbit corresponds to a threshold offset2, a cell 1 on a non-co-orbit 1 corresponds to a distance threshold offset3, and both a cell 2 and a cell 3 on the non-co-orbit 1 correspond to a distance threshold offset4, distance thresholds corresponding to different cells may be determined based on the reference distance threshold dref and distance threshold adjustment values corresponding to the different cells. For example, both the cell 1 and the cell 2 on the co-orbit correspond to a distance threshold d1=dref+offset1, the cell 3 on the co-orbit corresponds to a threshold d2=dref+offset2, the cell 1 on the non-co-orbit 1 corresponds to a distance threshold d3=dref+offset3, and both the cell 2 and the cell 3 on the non-co-orbit 1 correspond to a distance threshold d4=dref+offset4.

In still another implementation 4, the distance threshold information may indicate a distance threshold corresponding to an orbit and distance thresholds corresponding to cells, that is, granularities of distance thresholds may be both an orbit granularity and a cell granularity.

For example, a distance threshold is indicated for a co-orbit at the orbit granularity, and specific cells are not distinguished, that is, the co-orbit corresponds to a threshold d1; and distance thresholds may be indicated for a non-co-orbit at the cell granularity, that is, different cells on the non-co-orbit may correspond to different distance thresholds.

For example, in the distance threshold information, a co-orbit corresponds to a distance threshold d0, a cell 1 on a non-co-orbit 1 corresponds to a distance threshold d1, and both a cell 2 and a cell 3 on the non-co-orbit 1 correspond to a distance threshold d2.

For another example, it is assumed that the reference distance threshold dref is a predefined value that is not related to any orbit/cell. If in the distance threshold information, a co-orbit corresponds to a distance threshold offset0, a cell 1 on a non-co-orbit 1 corresponds to a distance threshold offset1, and both a cell 2 and a cell 3 on the non-co-orbit 1 correspond to a distance threshold offset2, distance thresholds corresponding to different orbits/cells may be determined based on the reference distance threshold and distance threshold adjustment values corresponding to the different orbits/cells. For example, the co-orbit corresponds to a distance threshold d0=dref+offset0, the cell 1 on the non-co-orbit 1 corresponds to a distance threshold d1=dref+offset1, and both the cell 2 and the cell 3 on the non-co-orbit 1 correspond to a distance threshold d2=dref+offset2.

In still another implementation 5, the distance threshold information may indicate a distance threshold corresponding to an orbit type and distance thresholds corresponding to orbits, that is, granularities of distance thresholds may be both an orbit granularity and an orbit type granularity.

For example, a distance threshold is indicated for a co-orbit at the orbit granularity, that is, the co-orbit corresponds to a threshold d0; and distance thresholds may be indicated for non-co-orbits at the orbit granularity, that is, different non-co-orbits may correspond to different distance thresholds.

For example, in the distance threshold information, a co-orbit corresponds to a distance threshold d0, an orbit 1 corresponds to a distance threshold d1, an orbit 2 corresponds to a distance threshold d2, and an orbit 3 corresponds to a distance threshold d3.

For another example, it is assumed that the reference distance threshold dref is a predefined value that is not related to any orbit/cell. If in the distance threshold information, a co-orbit corresponds to a distance threshold offset0, an orbit 1 corresponds to a distance threshold offset1, an orbit 2 corresponds to a distance threshold offset2, and an orbit 3 corresponds to a distance threshold offset3, distance thresholds corresponding to different orbits may be determined based on the reference distance threshold and distance threshold adjustment values corresponding to the different orbits. For example, the co-orbit corresponds to a distance threshold d0=dref+offset0, the orbit 1 corresponds to a distance threshold d1=dref+offset1, the orbit 2 corresponds to a distance threshold d2=dref+offset2, and the orbit 3 corresponds to a distance threshold d3=dref+offset3.

S602: The terminal device determines, based on the distance threshold information, whether to perform measurement and/or cell reselection.

In some feasible implementations, when the distance threshold information indicates the distance thresholds corresponding to the different cells, determining, based on the distance threshold information, whether to perform measurement and/or cell reselection may be understood as follows: determining, based on the distance threshold information, a first distance threshold corresponding to a first cell, and determining, based on a first distance threshold, whether to perform measurement on the first cell and/or whether to reselect to the first cell. The first cell is a neighboring cell of the terminal device.

For example, it is assumed that in the distance threshold information, both a cell 1 and a cell 2 on an orbit 1 correspond to a distance threshold d1, a cell 3 on the orbit 1 corresponds to a threshold d2, a cell 1 on an orbit 2 corresponds to a distance threshold d3, and both a cell 2 and a cell 3 on the orbit 2 correspond to a distance threshold d4. When an orbit of a satellite corresponding to the first cell is the same as the orbit of the satellite corresponding to the serving cell of the terminal device, for example, when the serving cell of the terminal device is the cell 1 on the orbit 1, and the neighboring cell of the terminal device is the cell 3 on the orbit 1, the first distance threshold is d2. When the orbit of the satellite corresponding to the first cell is different from the orbit of the satellite corresponding to the serving cell of the terminal device, for example, when the serving cell of the terminal device is the cell 1 on the orbit 1, and the neighboring cell of the terminal device is the cell 3 on the orbit 2, the first distance threshold is d4.

For another example, it is assumed that in the distance threshold information, an orbit 1 corresponds to a threshold d1, a cell 1 on an orbit 2 corresponds to a distance threshold d2, and both a cell 2 and a cell 3 on the orbit 2 correspond to a distance threshold d3. When an orbit of a satellite corresponding to the first cell is the same as the orbit of the satellite corresponding to the serving cell of the terminal device, for example, when the serving cell of the terminal device is the cell 1 on the orbit 1, and the neighboring cell of the terminal device is the cell 3 on the orbit 1, the first distance threshold (or referred to as a second distance threshold) is d1. When the orbit of the satellite corresponding to the first cell is different from the orbit of the satellite corresponding to the serving cell of the terminal device, for example, when the serving cell of the terminal device is the cell 1 on the orbit 1, and the neighboring cell of the terminal device is the cell 3 on the orbit 2, the first distance threshold (or referred to as the second distance threshold) is d3.

If the procedure shown in FIG. 6 is for an RRM measurement scenario, the distance threshold in (2-1-ii) in the foregoing "V" may be replaced with the first distance threshold determined herein, and whether to perform measurement on the first cell is determined based on the first distance threshold. In other words, when it is determined whether a frequency of the first cell needs to be measured, when the quality threshold condition in (2-1-i) is met, it may be further determined whether the distance threshold condition in (2-1-ii) is met. A difference lies in that the distance threshold in (2-1-i) needs to be replaced with the first distance threshold corresponding to the first cell.

If the procedure shown in FIG. 6 is for a cell reselection scenario, the distance threshold in (2-2-i) and (2-2-ii) in the foregoing "V" may be replaced with the first distance threshold determined herein, and whether to perform reselection to the first cell is determined based on the first distance threshold. In other words, when it is determined whether reselection needs to be performed to the first cell, conditions in (2-2-i) and (2-2-ii) in the foregoing "V" may be used for determining. A difference lies in that the distance threshold in (2-2-i) and (2-2-ii) needs to be replaced with the first distance threshold corresponding to the first cell.

In some other feasible implementations, when the distance threshold information indicates the distance thresholds corresponding to the different orbit types and/or the distance thresholds corresponding to the different orbits, determining, based on the distance threshold information, whether to perform measurement and/or cell reselection may be understood as follows: determining, based on the distance threshold information, a second distance threshold corresponding to an orbit of a satellite corresponding to the first cell, and determining, based on the second distance threshold, whether to perform measurement on the first cell and/or whether to reselect to the first cell. The first cell is a neighboring cell of the terminal device.

For example, it is assumed that in the distance threshold information, the co-orbit type corresponds to a distance threshold d0, and the non-co-orbit type corresponds to a distance threshold d1. When the orbit of the satellite corresponding to the first cell is the same as the orbit of the satellite corresponding to the serving cell of the terminal device, the second distance threshold is d0. When the orbit of the satellite corresponding to the first cell is different from the orbit of the satellite corresponding to the serving cell of the terminal device, the second distance threshold is d1.

For another example, it is assumed that in the distance threshold information, an orbit 1 corresponds to a distance threshold d0, an orbit 2 corresponds to a distance threshold d1, and an orbit 3 corresponds to a distance threshold d2. When the orbit of the satellite corresponding to the first cell is the same as the orbit of the satellite corresponding to the serving cell of the terminal device, for example, when the serving cell of the terminal device is a cell 1 on the orbit 1, and the neighboring cell of the terminal device is a cell 3 on the orbit 1, the second distance threshold is d0. When the orbit of the satellite corresponding to the first cell is different from the orbit of the satellite corresponding to the serving cell of the terminal device, for example, when the serving cell of the terminal device is a cell 1 on the orbit 1, and the neighboring cell of the terminal device is a cell 3 on the orbit 2, the second distance threshold is d1.

For another example, it is assumed that in the distance threshold information, a co-orbit corresponds to a distance threshold d0, an orbit 1 corresponds to a distance threshold d1, an orbit 2 corresponds to a distance threshold d2, and an orbit 3 corresponds to a distance threshold d3. When the orbit of the satellite corresponding to the first cell is the same as the orbit of the satellite corresponding to the serving cell of the terminal device, for example, when the serving cell of the terminal device is a cell 1 on the orbit 1, and the neighboring cell of the terminal device is a cell 3 on the orbit 1, the second distance threshold is d0. When the orbit of the satellite corresponding to the first cell is different from the orbit of the satellite corresponding to the serving cell of the terminal device, for example, when the serving cell of the terminal device is a cell 1 on the orbit 1, and the neighboring cell of the terminal device is a cell 3 on the orbit 2, the second distance threshold is d2.

If the procedure shown in FIG. 6 is for an RRM measurement scenario, the distance threshold in (2-1-ii) in the foregoing "V" may be replaced with the second distance threshold determined herein, and whether to perform measurement on the first cell is determined based on the second distance threshold. In other words, when it is determined whether a frequency of the first cell needs to be measured, when the quality threshold condition in (2-1-i) is met, it may be further determined whether the distance threshold condition in (2-1-ii) is met. A difference lies in that the distance threshold in (2-1-i) needs to be replaced with the second distance threshold corresponding to the orbit of the satellite corresponding to the first cell.

If the procedure shown in FIG. 6 is for a cell reselection scenario, the distance threshold in (2-2-i) and (2-2-ii) in the foregoing "V" may be replaced with the second distance threshold determined herein, and whether to perform reselection to the first cell is determined based on the second distance threshold. In other words, when it is determined whether reselection needs to be performed to the first cell, conditions in (2-2-i) and (2-2-ii) in the foregoing "V" may be used for determining. A difference lies in that the distance threshold in (2-2-i) and (2-2-ii) needs to be replaced with the second distance threshold corresponding to the orbit of the satellite corresponding to the first cell.

It should be noted that whether the orbit of the satellite corresponding to the first cell and the orbit of the satellite corresponding to the serving cell of the terminal device are a same orbit may be determined based on ephemeris information of the satellite corresponding to the first cell and ephemeris information of the satellite corresponding to the serving cell. A specific determining manner is not described in detail herein in this application.

S603: The network device sends distance threshold update information to the terminal device. Correspondingly, the terminal device receives the distance threshold update information from the network device.

Usually, when a satellite coverage status changes, the network device may correspondingly update the distance threshold. For example, in regions of different latitudes, if relative positions between orbits of satellites change, the network device may update thresholds. For example, assuming that a spacing between the orbit of the satellite of the serving cell and a non-co-orbit 1 decreases, or an area of an overlapping region between the serving cell and a neighboring cell of the non-co-orbit 1 increases, the network device may decrease a distance threshold corresponding to the non-co-orbit 1.

It should be understood that the network device may update the distance threshold information in a manner of using a system information update procedure. For example, in a system information modification periodicity (SI modification periodicity), UE is notified, by using a system information modification indication (SI change notification), that system information or specific distance threshold information is to change, and then updated system information/distance threshold information is sent in a next system information modification periodicity.

It should be understood that numbers of steps in this application do not indicate an execution sequence of the steps. For example, a sequence of step S603 and another step is not limited, and the network device may update the distance threshold information as required.

In this embodiment of this application, for RRM measurement/cell reselection in an NTN scenario, whether to perform RRM measurement and/or cell reselection is determined with reference to the distance threshold information. This manner helps ensure communication performance. In addition, the distance threshold information in this application may indicate the distance thresholds corresponding to the different orbit types, and/or the distance thresholds corresponding to the different orbits, and/or the distance thresholds corresponding to the different cells. In the NTN scenario, because satellites may be located in different orbits, coverage overlapping statuses between cells of different orbits may vary. Therefore, a manner of configuring a distance threshold at an orbit type/orbit/cell granularity is used, so that control over determining, based on the distance threshold information, whether to perform measurement and/or cell reselection is more appropriate, thereby further improving communication performance and improving user experience.

It should be noted that, in the method shown in FIG. 6, the network device needs to send or update the distance threshold information. Based on this, this application further provides a manner in which a distance threshold derivation relationship is defined to implement differentiated configuration of adaptively using different distance thresholds for different orbits/neighboring cells. In this way, overheads of sending or updating the distance threshold information by the network device can be reduced. When a satellite system is stably deployed, the terminal device may directly obtain a required distance threshold based on the defined distance threshold relationship, and does not need to obtain related information in real time, so that operation complexity of the terminal device is reduced. FIG. 7 is another schematic flowchart of a communication method according to an embodiment of this application. As shown in FIG. 7, the communication method includes the following steps S701 and S702. The method shown in FIG. 7 may be performed by a terminal device and a network device, or the method shown in FIG. 7 may be performed by a chip in the terminal device and a chip in the network device. For example, the network device may be a non-terrestrial network device (a satellite is used as an example for description) or an access network device (a base station is used as an example for description). For ease of description, in FIG. 7, an example in which the method is performed by the terminal device and the network device is mainly used for description. It should be noted that FIG. 7 is a schematic flowchart of a method embodiment of this application, and shows detailed communication steps or operations of the method. However, these steps or operations are merely examples. Other operations or variants of various operations in FIG. 7 may alternatively be performed in embodiments of this application. In addition, the steps in FIG. 7 may be performed in a sequence different from a sequence shown in FIG. 7, and not all operations in FIG. 7 may be performed.

S701: The terminal device determines, based on a reference distance threshold and a distance threshold derivation relationship, a third distance threshold corresponding to an orbit of a satellite corresponding to a first cell.

Herein, the first cell is a neighboring cell of the terminal device, and the first cell is an NTN cell. The reference distance threshold may be predefined, preconfigured, or configured by the network device (for example, a base station or a satellite). This is not limited in this application. Alternatively, the distance threshold derivation relationship may be predefined, preconfigured, or configured by the network device (for example, a base station or a satellite). This is not limited in this application. Usually, the reference distance threshold may be only a reference value, or may be a distance threshold corresponding to a specific orbit/cell. This is not limited in this application.

In some feasible implementations ①, the distance threshold derivation relationship includes a first correspondence between different latitude ranges and distance threshold adjustment values in a case of a co-orbit type, and/or a second correspondence between different latitude ranges and distance threshold adjustment values in a case of a non-co-orbit type, the reference distance threshold and the distance threshold adjustment value are used to determine the third distance threshold (to be specific, a specific value of the distance threshold may be obtained by performing an operation based on the reference distance threshold and the distance threshold adjustment value carried in the correspondence). Optionally, in the implementation ①, the reference distance threshold may be a distance threshold used by the terminal device within a first latitude range, or the reference distance threshold may be another value that is not related to a latitude range. This is not limited in this application.

It should be understood that in this implementation ①, when an orbit of a satellite corresponding to the first cell is the same as an orbit of a satellite corresponding to a serving cell of the terminal device, the third distance threshold is determined based on the reference distance threshold, the first correspondence, and a latitude range of the terminal device. When the orbit of the satellite corresponding to the first cell is different from the orbit of the satellite corresponding to the serving cell of the terminal device, the third distance threshold is determined based on the reference distance threshold, the second correspondence, and the latitude range of the terminal device.

For example, it is assumed that the reference distance threshold is dref, and latitude ranges of the earth may include a latitude range 1, a latitude range 2, and a latitude range 3. For the co-orbit type, the first correspondence may be that the latitude range 1 corresponds to a distance threshold adjustment value offset1, the latitude range 2 corresponds to a distance threshold adjustment value offset2, and the latitude range 3 corresponds to a distance threshold adjustment value offset3. For the non-co-orbit type, the second correspondence may be that the latitude range 1 corresponds to a distance threshold adjustment value offset4, the latitude range 2 corresponds to a distance threshold adjustment value offset5, and the latitude range 3 corresponds to a distance threshold adjustment value offset6.

If the orbit of the satellite corresponding to the first cell is the same as the orbit of the satellite corresponding to the serving cell of the terminal device, for example, the serving cell of the terminal device is a cell 1 on an orbit 1, and the neighboring cell of the terminal device is a cell 3 on the orbit 1, and the current latitude range of the terminal device is the latitude range 1, it may be determined, based on the first correspondence, that a distance threshold adjustment value is offset 1. Therefore, the third distance threshold is (dref+offset1).

If the orbit of the satellite corresponding to the first cell is different from the orbit of the satellite corresponding to the serving cell of the terminal device, for example, the serving cell of the terminal device is a cell 1 on an orbit 1, and the neighboring cell of the terminal device is a cell 3 on an orbit 2, and the current latitude range of the terminal device is the latitude range 1, it may be determined, based on the second correspondence, that a distance threshold adjustment value is offset4. Therefore, the third distance threshold is (dref+offset4).

In some feasible implementations ②, the distance threshold derivation relationship includes a third correspondence between different orbital spacings and distance threshold adjustment values. Optionally, in the implementation ②, the reference distance threshold may be a distance threshold corresponding to an orbit of a satellite corresponding to a serving cell of the terminal device, or the reference distance threshold may be another value that is not related to the serving cell of the terminal device. This is not limited in this application.

It should be understood that in the implementation ②, the third distance threshold is determined based on the reference distance threshold, the third correspondence, and an orbital spacing between the orbit of the satellite corresponding to the first cell and the orbit of the satellite corresponding to the serving cell of the terminal device.

For example, it is assumed that the reference distance threshold is dref, and the third correspondence is that an orbital spacing 1 corresponds to a distance threshold adjustment value offset1, an orbital spacing 2 corresponds to a distance threshold adjustment value offset2, an orbital spacing 3 corresponds to a distance threshold adjustment value offset3, and an orbital spacing 4 corresponds to a distance threshold adjustment value offset4.

If the orbital spacing between the orbit of the satellite corresponding to the first cell and the orbit of the satellite corresponding to the serving cell of the terminal device is the orbital spacing 1, it may be determined, based on the third correspondence, that a distance threshold adjustment value is offset1. Therefore, the third distance threshold is (dref+offset1).

If the orbital spacing between the orbit of the satellite corresponding to the first cell and the orbit of the satellite corresponding to the serving cell of the terminal device is the orbital spacing 2, it may be determined, based on the third correspondence, that a distance threshold adjustment value is offset2. Therefore, the third distance threshold is (dref+offset2). Cases of other orbital spacings are similar, and are not listed one by one herein.

It should be noted that the orbital spacing described in the implementation ② may alternatively be replaced with a satellite spacing. Usually, the orbital spacing may be understood as a distance between orbits of satellites, for example, may be a distance between two points on the orbits; and the satellite spacing may be a distance between satellites. In other words, the third distance threshold may alternatively be determined based on the reference distance threshold, a correspondence (for ease of differentiation, a fourth correspondence is used for description below) between different satellite spacings and distance threshold adjustment values, and a satellite distance between the satellite corresponding to the first cell and the satellite corresponding to the serving cell of the terminal device.

For example, it is assumed that the reference distance threshold is dref, and the fourth correspondence is that a satellite spacing 1 corresponds to a distance threshold adjustment value offset1, a satellite spacing 2 corresponds to a distance threshold adjustment value offset2, a satellite spacing 2 corresponds to a distance threshold adjustment value offset2, a satellite spacing 3 corresponds to a distance threshold adjustment value offset3, and a satellite spacing 4 corresponds to a distance threshold adjustment value offset4.

If the satellite spacing between the satellite corresponding to the first cell and the satellite corresponding to the serving cell of the terminal device is the satellite spacing 1, it may be determined, based on the fourth correspondence, that a distance threshold adjustment value is offset1. Therefore, the third distance threshold is (dref÷offset1).

If the satellite spacing between the satellite corresponding to the first cell and the satellite corresponding to the serving cell of the terminal device is the satellite spacing 2, it may be determined, based on the fourth correspondence, that a distance threshold adjustment value is offset2. Therefore, the third distance threshold is (dref+offset2). Cases of other satellite spacings are similar, and are not listed one by one herein.

It should be noted that whether the orbit of the satellite corresponding to the first cell and the orbit of the satellite corresponding to the serving cell of the terminal device are a same orbit may be determined based on ephemeris information of the satellite corresponding to the first cell and ephemeris information of the satellite corresponding to the serving cell. A specific determining manner is not described in detail herein in this application. Similarly, the orbital spacing or the satellite spacing may alternatively be determined based on ephemeris information of satellites. Details are not described in this application. Optionally, position information of the terminal device may be used to determine the latitude range of the terminal device.

S702: The terminal device determines, based on the third distance threshold, whether to perform measurement on the first cell and/or whether to reselect to the first cell.

It should be understood that, if the procedure shown in FIG. 7 is for an RRM measurement scenario, the distance threshold in (2-1-ii) in the foregoing "V" may be replaced with the third distance threshold determined herein, and whether to perform measurement on the first cell is determined based on the third distance threshold. In other words, when it is determined whether a frequency of the first cell needs to be measured, when the quality threshold condition in (2-1-i) is met, it may be further determined whether the distance threshold condition in (2-1-ii) is met. A difference lies in that the distance threshold in (2-1-i) needs to be replaced with the third distance threshold associated the first cell.

If the procedure shown in FIG. 7 is for a cell reselection scenario, the distance threshold in (2-2-i) and (2-2-ii) in the foregoing "V" may be replaced with the third distance threshold determined herein, and whether to perform reselection to the first cell is determined based on the third distance threshold. In other words, when it is determined whether reselection needs to be performed to the first cell, conditions in (2-2-i) and (2-2-ii) in the foregoing "V" may be used for determining. A difference lies in that the distance threshold in (2-2-i) and (2-2-ii) needs to be replaced with the third distance threshold associated with the first cell.

Optionally, the reference distance threshold and/or the distance threshold derivation relationship may also be updated based on a satellite status. For example, if orbit planning, coverage planning, or the like of the satellite changes, the reference distance threshold and/or the distance threshold derivation relationship may be updated. For example, the network device (for example, a base station or a satellite) may send reference distance threshold update information and/or distance threshold derivation relationship update information to the terminal device, where the reference distance threshold update information is used to update the reference distance threshold, and/or the distance threshold derivation relationship update information is used to update the distance threshold derivation relationship.

In this embodiment of this application, for RRM measurement/cell reselection in an NTN scenario, the third distance threshold corresponding to the orbit of the non-terrestrial network device corresponding to the neighboring cell (that is, the first cell) of the terminal device is determined with reference to the reference distance threshold and the distance threshold derivation relationship, and whether to perform measurement on the first cell and/or whether to reselect to the first cell are/is determined based on the third distance threshold. This manner enables control over RRM measurement and/or cell reselection to be more appropriate, improves communication performance, and improves user experience.

It should be understood that, if an application scenario of the communication method provided in this application is the RRM measurement scenario, the configured distance threshold is a distance threshold applicable to the RRM measurement scenario. If the application scenario of the communication method provided in this application is the cell reselection scenario, the configured distance threshold is a distance threshold applicable to cell reselection. Usually, a value configured for the distance threshold in the RRM measurement scenario may be the same as or different from a value configured for the distance threshold in the cell reselection scenario. This is not limited in this application.

It should be understood that the solutions provided in this application are mainly designed for cell reselection measurement in a non-connected state and a distance threshold for cell reselection. However, technically, the solutions are not limited to being used in the two scenarios. Any solution related to a distance threshold in an NTN system can apply the solutions provided in this application to optimize setting of the distance threshold, so that the distance threshold is more adaptive to an actual NTN cell coverage status.

It should be understood that the solutions provided in this application are mainly for intra-frequency measurement control, equal/low-priority inter-frequency/inter-RAT measurement control, intra-frequency cell reselection, and equal/low-priority inter-frequency/inter-RAT cell reselection. However, technically, the solutions of the distance threshold in this application are also applicable to measurement control/cell reselection of a high-priority frequency.

In conclusion, it can be learned that, for RRM measurement, according to the method provided in this application, different orbits/neighboring cells may be distinguished to adaptively use different distance thresholds to control whether the terminal device starts measurement on the orbits/neighboring cells. In this way, it is ensured that the terminal device starts measurement on the neighboring cell only when coverage of the neighboring cell is close, so that the terminal device does not measure a neighboring cell that is not around in advance, and unnecessary measurement power consumption of the terminal device is reduced. In addition, when the coverage of the neighboring cell is close, the terminal device can also start measurement on the neighboring cell in time, so that subsequent cell reselection determining is supported, and mobility performance is ensured. For cell reselection, according to the method provided in this application, different orbits/neighboring cells may be distinguished to adaptively use different distance thresholds to control whether the terminal device uses the orbits/neighboring cells as target cells for cell reselection. In this way, it is ensured that the terminal device reselects to a specific neighboring cell only when the terminal device is located in coverage of the neighboring cell, so that a reselection failure caused by premature reselection performed by the terminal device is avoided. In addition, it is ensured that when the terminal device is far away from the coverage of the serving cell and reaches the coverage of the neighboring cell, the terminal device can perform reselection in time to switch to an appropriate serving cell for camping, so that mobility performance is ensured.

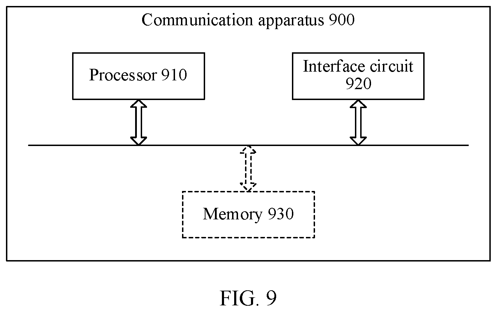

Communication apparatuses provided in this application are described in detail below with reference to FIG. 8 and FIG. 9.

It may be understood that, to implement functions in the foregoing embodiments, the communication apparatus includes corresponding hardware structures and/or software modules for performing various functions. A person skilled in the art should easily be aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

FIG. 8 and FIG. 9 are diagrams of possible structures of communication apparatuses according to embodiments of this application. These communication apparatuses may be configured to implement functions of the terminal device or the network device in the foregoing method embodiments. Therefore, beneficial effect of the foregoing method embodiments can also be implemented. In embodiments of this application, the terminal device may be one of the terminals 120a to 120j shown in FIG. 1, or may be a module (for example, a chip) used in the terminal device. The network device may be the satellite shown in FIG. 2a to FIG. 2d, or may be a module (for example, a chip) used in the network device.

As shown in FIG. 8, a communication apparatus 800 includes a processing unit 810 and a transceiver unit 820. The communication apparatus 800 is configured to implement functions of the terminal device or the network device in the method embodiments shown in FIG. 6 and FIG. 7.

When the communication apparatus 800 is configured to implement functions of the terminal device in the method embodiments shown in FIG. 6 and FIG. 7: In an implementation, the transceiver unit 820 is configured to receive distance threshold information, where the distance threshold information indicates distance thresholds corresponding to different orbit types, and/or distance thresholds corresponding to different orbits, and/or distance thresholds corresponding to different cells, the orbit is an orbit of a non-terrestrial network device, and the cell is a non-terrestrial network NTN cell; and the processing unit 810 is configured to determine, based on the distance threshold information, whether to perform measurement and/or cell reselection.

In another implementation, the processing unit 810 is configured to determine, based on a reference distance threshold and a distance threshold derivation relationship, a third distance threshold corresponding to an orbit of a non-terrestrial network device corresponding to a first cell, where the first cell is a neighboring cell of the terminal device, and the first cell is a non-terrestrial network NTN cell, where the processing unit 810 is configured to determine, based on the third distance threshold, whether to perform measurement on the first cell and/or whether to reselect to the first cell.

For example, the transceiver unit 820 is configured to receive reference distance threshold update information and/or distance threshold derivation relationship update information.

When the communication apparatus 800 is configured to implement functions of the network device in the method embodiments shown in FIG. 6 and FIG. 7:

In an implementation, the processing unit 810 is configured to determine distance threshold information, where the distance threshold information indicates distance thresholds corresponding to different orbit types, and/or distance thresholds corresponding to different orbits, and/or distance thresholds corresponding to different cells, the orbit is an orbit of a non-terrestrial network device, and the cell is a non-terrestrial network NTN cell; and the transceiver unit 820 is configured to send the distance threshold information.

In another implementation, the processing unit 810 is configured to determine a reference distance threshold and a distance threshold derivation relationship, where the reference distance threshold and the distance threshold derivation relationship are used to determine a third distance threshold corresponding to an orbit of a non-terrestrial network device corresponding to a first cell, the first cell is a neighboring cell of a terminal device, and the first cell is a non-terrestrial network NTN cell; and the transceiver unit 820 is configured to send the reference distance threshold and/or the distance threshold derivation relationship.

For more detailed descriptions of the processing unit 810 and the transceiver unit 820, refer to related descriptions in the method embodiments shown in FIG. 6 and FIG. 7.

As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. For example, the communication apparatus 900 may further include a memory 930, configured to: store instructions executed by the processor 910, store input data required for running instructions by the processor 910, or store data generated after the processor 910 runs instructions.

When the communication apparatus 900 is configured to implement the methods shown in FIG. 6 and FIG. 7, the processor 910 is configured to implement a function of the processing unit 810, and the interface circuit 920 is configured to implement a function of the transceiver unit 820.

When the communication apparatus is a chip used in a terminal device, the chip in the terminal device implements the functions of the terminal device in the foregoing method embodiments. The chip in the terminal device receives, through another module (for example, a radio frequency module or an antenna) in the terminal device, information sent by a network device to the terminal device; or the chip in the terminal device sends information to another module (for example, a radio frequency module or an antenna) in the terminal device, where the information is sent by the terminal device to a network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal device to the network device; or the module in the network device sends information to another module (for example, a radio frequency module or an antenna) in the network device, where the information is sent by the network device to a terminal device. The module in the network device herein may be a baseband chip of the network device, or may be another module.

This application further provides a communication apparatus. The communication apparatus includes a processor. When the communication apparatus is a terminal device, the processor is configured to implement actions performed by the terminal device in the methods shown in FIG. 6 and FIG. 7. When the communication apparatus is a network device, the processor is configured to implement actions performed by the network device in the methods shown in FIG. 6 and FIG. 7.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. The storage medium may alternatively be a component of the processor. The processor and the storage medium may be located in an ASIC. In addition, the ASIC may be located in the network device or the terminal device. Alternatively, the processor and the storage medium may exist in the network device or the terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are completely or partially performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile storage medium or a non-volatile storage medium, or may include both a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A communication method, comprising:

   receiving distance threshold information, wherein the distance threshold information indicates distance thresholds corresponding to different orbit types, and/or distance thresholds corresponding to different orbits, and/or distance thresholds corresponding to different cells, the orbit is an orbit of a non-terrestrial network device, and the cell is a non-terrestrial network NTN cell; and
   determining, based on the distance threshold information, whether to perform measurement and/or cell reselection.

2. The method according to claim 1, wherein the distance threshold information indicates the distance thresholds corresponding to the different cells; and determining, based on the distance threshold information, whether to perform measurement and/or cell reselection comprises:

   determining, based on the distance threshold information, a first distance threshold corresponding to a first cell, wherein the first cell is a neighboring cell of a terminal device; and
   determining, based on the first distance threshold, whether to perform measurement on the first cell and/or whether to reselect to the first cell.

3. The method according to claim 1, wherein the distance threshold information indicates the distance thresholds corresponding to the different orbit types and/or the distance thresholds corresponding to the different orbits; and determining, based on the distance threshold information, whether to perform measurement and/or cell reselection comprises:

   determining, based on the distance threshold information, a second distance threshold corresponding to an orbit of a non-terrestrial network device corresponding to a first cell, wherein the first cell is a neighboring cell of a terminal device; and
   determining, based on the second distance threshold, whether to perform measurement on the first cell and/or whether to reselect to the first cell.

4. The method according to any one of claims 1 to 3, wherein

   the distance threshold information comprises the distance thresholds corresponding to the different orbit types, and/or the distance thresholds corresponding to the different orbits, and/or the distance thresholds corresponding to the different cells; or
   the distance threshold information comprises a reference distance threshold, and distance threshold adjustment values corresponding to the different orbit types, and/or distance threshold adjustment values corresponding to the different orbits, and/or distance threshold adjustment values corresponding to the different cells, wherein the reference distance threshold and the distance threshold adjustment values corresponding to the different orbit types are used to determine the distance thresholds corresponding to the different orbit types, the reference distance threshold and the distance threshold adjustment values corresponding to the different orbits are used to determine the distance thresholds corresponding to the different orbits, and the reference distance threshold and the distance threshold adjustment values corresponding to the different cells are used to determine the distance thresholds corresponding to the different cells.

5. The method according to claim 4, wherein the reference distance threshold is a distance threshold corresponding to an orbit of a non-terrestrial network device corresponding to a serving cell of the terminal device.

6. The method according to any one of claims 3 to 5, wherein the distance threshold information indicates the distance thresholds corresponding to the different orbit types, and the different orbit types comprise a co-orbit type and a non-co-orbit type; and

   when the orbit of the non-terrestrial network device corresponding to the first cell is the same as the orbit of the non-terrestrial network device corresponding to the serving cell of the terminal device, the second distance threshold is a distance threshold corresponding to the co-orbit type; or
   when the orbit of the non-terrestrial network device corresponding to the first cell is different from the orbit of the non-terrestrial network device corresponding to the serving cell of the terminal device, the second distance threshold is a distance threshold corresponding to the non-co-orbit type.

7.  A communication method, wherein the method comprises:

   determining, based on a reference distance threshold and a distance threshold derivation relationship, a third distance threshold corresponding to an orbit of a non-terrestrial network device corresponding to a first cell, wherein the first cell is a neighboring cell of a terminal device, and the first cell is a non-terrestrial network NTN cell; and
   determining, based on the third distance threshold, whether to perform measurement on the first cell and/or whether to reselect to the first cell.

8.  The method according to claim 7, wherein the distance threshold derivation relationship comprises a first correspondence between different latitude ranges and distance threshold adjustment values for a co-orbit type, and/or a second correspondence between different latitude ranges and distance threshold adjustment values for a non-co-orbit type, wherein the reference distance threshold and the distance threshold adjustment value are used to determine the third distance threshold.

9.  The method according to claim 8, wherein the reference distance threshold is a distance threshold used by the terminal device within a first latitude range.

10. The method according to claim 8 or 9, wherein

   when the orbit of the non-terrestrial network device corresponding to the first cell is the same as an orbit of a non-terrestrial network device corresponding to a serving cell of the terminal device, the third distance threshold is determined based on the reference distance threshold, the first correspondence, and a latitude range of the terminal device; and/or
   when the orbit of the non-terrestrial network device corresponding to the first cell is different from the orbit of the non-terrestrial network device corresponding to the serving cell of the terminal device, the third distance threshold is determined based on the reference distance threshold, the second correspondence, and the latitude range of the terminal device.

11. The method according to claim 7, wherein the distance threshold derivation relationship comprises a third correspondence between different orbital spacings and distance threshold adjustment values.

12. The method according to claim 11, wherein the reference distance threshold is a distance threshold corresponding to an orbit of a non-terrestrial network device corresponding to a serving cell of the terminal device.

13. The method according to claim 11 or 12, wherein the third distance threshold is determined based on the reference distance threshold, the third correspondence, and an orbital spacing between the orbit of the non-terrestrial network device corresponding to the first cell and the orbit of the non-terrestrial network device corresponding to the serving cell of the terminal device.

14. The method according to any one of claims 7 to 13, wherein the reference distance threshold and/or the distance threshold derivation relationship are/is predefined, preconfigured, configured by an access network device, or configured by a non-terrestrial network device.

15. A communication method, comprising:

   determining distance threshold information, wherein the distance threshold information indicates distance thresholds corresponding to different orbit types, and/or distance thresholds corresponding to different orbits, and/or distance thresholds corresponding to different cells, the orbit is an orbit of a non-terrestrial network device, and the cell is a non-terrestrial network NTN cell; and
   sending the distance threshold information.

16. The method according to claim 15, wherein

   the distance threshold information comprises the distance thresholds corresponding to the different orbit types, and/or the distance thresholds corresponding to the different orbits, and/or the distance thresholds corresponding to the different cells; or
   the distance threshold information comprises a reference distance threshold, and distance threshold adjustment values corresponding to the different orbit types, and/or distance threshold adjustment values corresponding to the different orbits, and/or distance threshold adjustment values corresponding to the different cells, wherein the reference distance threshold and the distance threshold adjustment values corresponding to the different orbit types are used to determine the distance thresholds corresponding to the different orbit types, the reference distance threshold and the distance threshold adjustment values corresponding to the different orbits are used to determine the distance thresholds corresponding to the different orbits, and the reference distance threshold and the distance threshold adjustment values corresponding to the different cells are used to determine the distance thresholds corresponding to the different cells.

17. The method according to claim 16, wherein the reference distance threshold is a distance threshold corresponding to an orbit of a non-terrestrial network device corresponding to a serving cell of the terminal device.

18. A communication method, wherein the method comprises:

   determining a reference distance threshold and a distance threshold derivation relationship, wherein the reference distance threshold and the distance threshold derivation relationship are used to determine a third distance threshold corresponding to an orbit of a non-terrestrial network device corresponding to a first cell, the first cell is a neighboring cell of a terminal device, and the first cell is a non-terrestrial network NTN cell; and
   sending the reference distance threshold and/or the distance threshold derivation relationship.

19. The method according to claim 18, wherein the distance threshold derivation relationship comprises a first correspondence between different latitude ranges and distance threshold adjustment values for a co-orbit type, and/or a second correspondence between different latitude ranges and distance threshold adjustment values for a non-co-orbit type, wherein the reference distance threshold and the distance threshold adjustment value are used to determine the third distance threshold.

20. The method according to claim 19, wherein the reference distance threshold is a distance threshold used by the terminal device within a first latitude range.

21. The method according to claim 19 or 20, wherein

   when the orbit of the non-terrestrial network device corresponding to the first cell is the same as an orbit of a non-terrestrial network device corresponding to a serving cell of the terminal device, the third distance threshold is determined based on the reference distance threshold, the first correspondence, and a latitude range of the terminal device; and/or
when the orbit of the non-terrestrial network device corresponding to the first cell is different from the orbit of the non-terrestrial network device corresponding to the serving cell of the terminal device, the third distance threshold is determined based on the reference distance threshold, the second correspondence, and the latitude range of the terminal device.

22. The method according to claim 18, wherein the distance threshold derivation relationship comprises a third correspondence between different orbital spacings and distance threshold adjustment values.

23. The method according to claim 22, wherein the reference distance threshold is a distance threshold corresponding to an orbit of a non-terrestrial network device corresponding to a serving cell of the terminal device.

24. The method according to claim 22 or 23, wherein the third distance threshold is determined based on the reference distance threshold, the third correspondence, and an orbital spacing between the orbit of the non-terrestrial network device corresponding to the first cell and the orbit of the non-terrestrial network device corresponding to the serving cell of the terminal device.

25. A communication apparatus, comprising a unit or module configured to perform the method according to any one of claims 1 to 6, comprising a unit or module configured to perform the method according to any one of claims 7 to 14, comprising a unit or module configured to perform the method according to any one of claims 15 to 17, or comprising a unit or module configured to perform the method according to any one of claims 18 to 24.

26. A communication apparatus, comprising a processor, wherein the processor is configured to implement the method according to any one of claims 1 to 6, the method according to any one of claims 7 to 14, the method according to any one of claims 15 to 17, or the method according to any one of claims 18 to 24.

27. A computer-readable storage medium, wherein the storage medium stores a computer program or instructions; and when the computer program or the instructions are executed by a communication apparatus, the method according to any one of claims 1 to 6 is implemented, the method according to any one of claims 7 to 14 is implemented, the method according to any one of claims 15 to 17 is implemented, or the method according to any one of claims 18 to 24 is implemented.

28. A computer program product, comprising computer program code, wherein when the computer program code is run on a computer, the method according to any one of claims 1 to 6 is implemented, the method according to any one of claims 7 to 14 is implemented, the method according to any one of claims 15 to 17 is implemented, or the method according to any one of claims 18 to 24 is implemented.

29. A communication system, comprising a communication apparatus configured to implement the method according to any one of claims 1 to 6 or the method according to any one of claims 7 to 14, and a communication apparatus configured to implement the method according to any one of claims 15 to 17 or the method according to any one of claims 18 to 24.

FIG. 1

FIG. 2a

FIG. 2b

FIG. 2c

FIG. 2d

FIG. 3

Satellite movement direction

t3　　　　t2　　　　t1

Cell 1　Cell 1　Cell 1

FIG. 4

Terminal device

Serving cell

dis1

dis2

Non-co-orbit
neighboring cell

dis1

Non-co-orbit
overlapping region

Co-orbit
overlapping
region

Terminal
device

Co-orbit
neighboring
cell

dis2

FIG. 5

```
┌─────────────┐                              ┌─────────────────┐
│  Terminal   │                              │ Network device  │
│   device    │                              │                 │
└──────┬──────┘                              └────────┬────────┘
       │                                              │
       │      S601: Send distance threshold           │
       │              information                     │
       │ ◄────────────────────────────────────────────│
       │                                              │
 ┌─────┴──────────────────────────┐                   │
 │ S602: Determine, based on the  │                   │
 │ distance threshold information,│                   │
 │ whether to perform measurement │                   │
 │   and/or cell reselection      │                   │
 └─────┬──────────────────────────┘                   │
       │      S603: Send distance threshold           │
       │            update information                │
       │ ◄────────────────────────────────────────────│
       │                                              │
```

FIG. 6

A terminal device determines, based on a reference distance threshold and a distance threshold derivation relationship, a third distance threshold corresponding to an orbit of a satellite corresponding to a first cell ⸺ S701

↓

The terminal device determines, based on the third distance threshold, whether to perform measurement on the first cell and/or whether to reselect to the first cell ⸺ S702

FIG. 7

```
┌───────────────────────────────┐
│   Communication apparatus      │
│              800               │
│                                │
│   ┌────────────────────────┐   │
│   │  Processing unit 810   │   │
│   └───────────┬────────────┘   │
│               │                │
│   ┌───────────┴────────────┐   │
│   │  Transceiver unit 820  │   │
│   └────────────────────────┘   │
│                                │
└───────────────────────────────┘
```

FIG. 8

Communication apparatus 900

Processor 910

Interface circuit 920

Memory 930

FIG. 9

## INTERNATIONAL SEARCH REPORT

| International application No. |
|---|
| **PCT/CN2024/123631** |

**A. CLASSIFICATION OF SUBJECT MATTER**

H04W 24/08(2009.01)i; H04W36/00(2009.01)i; H04W84/06(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, CNABS, WOTXT, DWPI, VEN, USTXT, EPTXT, CJFD, CNKI, 3GPP: 卫星, 轨道, 小区, 邻区, 距离, 门限, 阈值, 定值, 测量, 重选, 触发, 排除, 何时, 是否, 无需, 配置, 设置, 对应, 不同, 偏差, 偏移, 偏置, 调整, 推算, 估算, 规则, 计算, 关联, 关系, 高度, 纬度, 广播, 相关, 相应, 小于, 大于, cell, distance, reselection, test, threshold, large, less, offset, NTN.

**C. DOCUMENTS CONSIDERED TO BE RELEVANT**

| Category* | Citation of document, with indication, where appropriate, of the relevant passages | Relevant to claim No. |
|---|---|---|
| X | WO 2023068043 A1 (NEC CORP. et al.) 27 April 2023 (2023-04-27) description, paragraphs [0063]-[0067] and [0076]-[0083], and figure 1 | 1-4, 15-16, 25-29 |
| X | WO 2023143139 A1 (HUAWEI TECHNOLOGIES CO., LTD.) 03 August 2023 (2023-08-03) description, page 15, line 12 to page 31, line 30, and figures 1-15 | 1-4, 15-16, 25-29 |
| A | CN 115668807 A (SAMSUNG ELECTRONICS CO., LTD.) 31 January 2023 (2023-01-31) entire document | 1-29 |
| A | WO 2021237735 A1 (BEIJING XIAOMI MOBILE SOFTWARE CO., LTD.) 02 December 2021 (2021-12-02) entire document | 1-29 |
| A | WO 2021062729 A1 (GUANGDONG OPPO MOBILE TELECOMMUNICATIONS CORP., LTD.) 08 April 2021 (2021-04-08) entire document | 1-29 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 December 2024** | **07 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/123631**

| Patent document cited in search report | | | Publication date (day/month/year) | Patent family member(s) | | | Publication date (day/month/year) |
|---|---|---|---|---|---|---|---|
| WO | 2023068043 | A1 | 27 April 2023 | US | 2024292368 | A1 | 29 August 2024 |
| | | | | EP | 4420420 | A1 | 28 August 2024 |
| | | | | CN | 118140530 | A | 04 June 2024 |
| | | | | JP | 2024538153 | W | 18 October 2024 |
| WO | 2023143139 | A1 | 03 August 2023 | EP | 4456603 | A1 | 30 October 2024 |
| | | | | CN | 116567520 | A | 08 August 2023 |
| CN | 115668807 | A | 31 January 2023 | EP | 4135217 | A1 | 15 February 2023 |
| | | | | EP | 4135217 | A4 | 20 December 2023 |
| | | | | WO | 2022086244 | A1 | 28 April 2022 |
| | | | | KR | 20230092825 | A | 26 June 2023 |
| | | | | US | 2023209413 | A1 | 29 June 2023 |
| WO | 2021237735 | A1 | 02 December 2021 | BR | 112022024220 | A2 | 20 December 2022 |
| | | | | EP | 4161145 | A1 | 05 April 2023 |
| | | | | EP | 4161145 | A4 | 28 February 2024 |
| | | | | US | 2023089127 | A1 | 23 March 2023 |
| | | | | KR | 20230010726 | A | 19 January 2023 |
| | | | | JP | 7429806 | B2 | 08 February 2024 |
| | | | | CN | 114073128 | A | 18 February 2022 |
| WO | 2021062729 | A1 | 08 April 2021 | CN | 113647145 | A | 12 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311348301